# EUROPÄISCHE PATENTSCHRIFT

(11) **EP 3 519 126 B1**
(45) Veröffentlichungstag und Bekanntmachung des Hinweises auf die Patenterteilung: **20.03.2024**
(21) Anmeldenummer: 17780042.2
(22) Anmeldetag: 25.09.2017
(51) Int. Cl.: B22F 12/45, B29C 64/277, B33Y 30/00, B22F 10/28, B22F 12/13

(54) **HERSTELLEN DREIDIMENSIONALER WERKSTÜCKE MITTELS EINER MEHRZAHL VON BESTRAHLUNGSEINHEITEN**
PRODUCTION OF THREE-DIMENSIONAL WORKPIECES BY MEANS OF A PLURALITY OF IRRADIATION UNITS
FABRICATION DE PIÈCES TRIDIMENSIONNELLES AU MOYEN D'UNE PLURALITÉ D'UNITÉS DE RAYONNEMENT

(30) Priorität: 29.09.2016 DE 102016218887
(43) Veröffentlichungstag der Anmeldung: 07.08.2019
(73) Patentinhaber: Nikon SLM Solutions AG, 23560 Lübeck (DE)
(72) Erfinder: KROL, Toni Adam, 23560 Lübeck (DE); WIESNER, Andreas, 23560 Lübeck (DE); THIEL, Christiane, 23560 Lübeck (DE); ROESGEN, Lukas, 23560 Lübeck (DE); MUTZ, Felix, 23560 Lübeck (DE); IQBAL, Naveed, 23560 Lübeck (DE); WILKES, Jan, 23560 Lübeck (DE); HUEBINGER, Karsten, 23560 Lübeck (DE); SCHWARZE, Dieter, 23560 Lübeck (DE); MUELLER, Simon, 23560 Lübeck (DE); NEEF, Arne, 23560 Lübeck (DE)
(74) Vertreter: Schicker, Silvia
(86) Internationale Anmeldenummer: PCT/EP2017/074184
(87) Internationale Veröffentlichungsnummer: WO 2018/060119

(56) Entgegenhaltungen:
- WO-A1-2016/077250
- WO-A1-2016/085965
- WO-A1-2016/110440
- US-A1- 2014 263 209
- US-A1- 2015 165 556
- US-A1- 2015 174 823
- Anonymous: "Laser diode - Wikipedia", , 24 September 2016 (2016-09-24), XP055750515, Retrieved from the Internet: URL:https://en.wikipedia.org/w/index.php?t itle=Laser_diode&oldid=740904901 [retrieved on 2020-11-13]

## Beschreibung

Die Erfindung betrifft eine Vorrichtung und ein Verfahren zum Herstellen dreidimensionaler Werkstücke mittels eines generativen Schichtbauverfahrens unter Verwendung einer Mehrzahl von Bestrahlungseinheiten sowie das Verwenden einer derartigen Vorrichtung.

Bei generativen Schichtbauverfahren ist es bekannt, eine zunächst formlose oder formneutrale Formmasse durch eine Bestrahlung in eine gewünschte Form zu bringen und insbesondere zu verfestigen und dadurch Schicht für Schicht ein dreidimensionales Werkstück herzustellen. Dies kann insbesondere durch eine Bestrahlung mittels elektromagnetischer Strahlung erreicht werden, beispielsweise in Form von Laserstrahlung. In einem Ausgangszustand kann die Formmasse dabei zunächst als Granulat, Pulver oder flüssige Formmasse vorliegen und infolge der Bestrahlung selektiv bzw. ortsspezifisch verfestigt werden. Die Formmasse kann zum Beispiel Keramik-, Metall- oder Kunststoffmaterialien umfassen und auch Materialgemische hieraus. Eine Variante von generativen Schichtbauverfahren betrifft das sogenannte Pulverbettschmelzen, bei dem insbesondere metallische und/oder keramische Pulvermaterialien zu dreidimensionalen Werkstücken verfestigt und geformt werden.

Zum Herstellen einzelner Werkstückschichten ist es ferner bekannt, die Formmasse auf einer Baufläche aufzubringen und selektiv sowie nach Maßgabe der Geometrie der aktuell herzustellenden Werkstückschicht zu bestrahlen. Die Laserstrahlung dringt dabei in die Formmasse ein und verfestigt diese, beispielsweise in Folge eines Erhitzens, was ein Schmelzen oder Sintern verursacht. Ist eine Werkstückschicht verfestigt, wird eine neue Schicht unverarbeiteter Formmasse auf die bereits hergestellte Werkstückschicht aufgebracht, beispielsweise mittels bekannter Beschichteranordnungen. Anschließend erfolgt eine erneute Bestrahlung der nun obersten und noch unverarbeiteten Formmassenschicht. Folglich wird das Werkstück sukzessive Schicht für Schicht aufgebaut, wobei jede Schicht eine Querschnittsfläche des Werkstücks definiert. In diesem Zusammenhang ist es ferner bekannt, auf CAD- oder vergleichbare Werkstückdaten zurückzugreifen, um die Werkstücke im Wesentlichen automatisch herzustellen.

Bei der vorliegenden Erfindung können die vorstehenden Grundaspekte ebenfalls vorgesehen sein. Um das selektive Bestrahlen der Formmasse vorzunehmen, sind jedoch bisher aufwendige Optiken und Ablenkeinrichtungen zum Beispiel in Form sogenannter Scannereinheiten erforderlich. Ausgehend von einer Strahlquelle ermöglichen diese, die elektromagnetische Strahlung zum Beispiel in Form eines Laserstrahls flexibel auf vorbestimmte Bereiche der Baufläche und die darauf aufgebrachte Formmasse zu richten. Dies erhöht jedoch die Bearbeitungszeit, da der Strahl in Form sogenannter einzelner Bestrahlungsvektoren entlang der Oberfläche der Formmasse geführt werden muss. So sind zum Herstellen ausgefüllter beziehungsweise massiver Werkstückschichten oftmals pendelnde Laserstrahl-Ablenkungen entlang vorgegebener Scanvektoren erforderlich, die die Werkstückschicht vollständig abfahren müssen. Dies erhöht die Fertigungszeit und mindert die Effizienz des Herstellungsprozesses.

Die WO 2016/077250 A1 offenbart Verfahren und Vorrichtungen zum Erzeugen dreidimensionaler Objekte mittels 3-D Druck. Ein Verfahren umfasst die Schritte des Bereitstellens eines Materialbetts mit einem Werkstoff zur Verwendung beim Erzeugen zumindest eines Abschnitts eines dreidimensionalen Objekts und des Umwandelns zumindest eines Abschnitts des Werkstoffes im Materialbett unter Verwendung mehrerer Energiestrahlen aus einem Energiestrahl-Array, um einen gehärteten Werkstoff zu erzeugen. Das Umwandeln umfasst, die Energiestrahlen einer Relativbewegung bezüglich des Materialbetts entlang eines Vektorpfades zu unterziehen.

Die US 2015/0165556 A1 offenbart ein Verfahren und eine Vorrichtung, wobei ein Pulverbett in einem Schritt bestrahlt wird.

Eine Aufgabe der vorliegenden Erfindung besteht somit darin, eine Lösung zum Herstellen dreidimensionaler Werkstücke mittels eines generativen Schichtbauverfahrens bereitzustellen, die hinsichtlich ihrer Effizienz verbessert ist, und die vorteilhaft hinsichtlich der erzielbaren Fertigungsgüte und dem Vermeiden von Eigenspannungen sein kann.

Hierzu wird eine Vorrichtung zum Herstellen dreidimensionaler Werkstücke nach Anspruch 1 bereitgestellt, wobei die Vorrichtung eine Baufläche umfasst, die dazu eingerichtet ist, eine Formmasse aufzunehmen. Die Baufläche kann in bekannter Weise innerhalb beziehungsweise auf einem Träger der Vorrichtung bereitgestellt sein. Der Träger und/oder die Baufläche können einer nachfolgend erläuterten Bestrahlungsanordnung der Vorrichtung im Wesentlichen gegenüberliegen. Beispielsweise kann die Baufläche allgemein vertikal anhebbar und/oder absenkbar sein. Allgemein formuliert kann die Baufläche demnach in und/oder entgegen der Baurichtung relativ zu der Bestrahlungsanordnung bewegbar sein, wobei die Baurichtung die Schichtungsabfolge oder zunehmende Baugröße des Werkstücks betreffen kann. Es versteht sich, dass hierbei entweder die Baufläche bzw. der Träger und/oder die Bestrahlungsanordnung zum Ausführen der entsprechenden Bewegungen angetrieben sein können. Insbesondere kann die Bestrahlungsanordnung zum Ausführen einer Bestrahlung in unmittelbarer Nähe zu der Baufläche anordenbar sein (zum Beispiel in einem Abstand von weniger als 50 mm oder weniger als 30 mm), jedoch auch selektiv in einem größeren Abstand zu der Baufläche anordenbar sein, beispielsweise um eine nachfolgend erläuterte Beschichtungsanordnung entlang der Baufläche passieren zu lassen.

Wie vorstehend erläutert, kann die Formmasse in einem Ausgangszustand zunächst allgemein flüssig, pulver- oder granulatförmig bereitgestellt sein, und beispielsweise Kunststoff-, Keramik- oder Metallmaterialien umfassen und/oder Gemische daraus. Ferner kann die Formmasse dazu ausgebildet sein, nach Maßgabe einer nachfolgend erläuterten Bestrahlung selektiv verfestigbar zu sein, beispielsweise in Folge eines Schmelzens oder Sinterns oder aber dem selektiven und ortsspezifischem Aushärten von flüssigem Kunststoff.

Die Vorrichtung kann in allgemein bekannter Weise ferner eine Beschichteranordnung umfassen, die dazu ausgebildet ist, neue Formmasse auf die Baufläche und insbesondere auf bereits verfestigte und fertig hergestellte Werkstückschichten aufzubringen. Diese noch unverarbeitete Formmasse kann dann in einem nachfolgenden Schritt erneut bestrahlt werden, um eine weitere Werkstückschicht herzustellen und somit das Werkstück sukzessive Schicht für Schicht aufzubauen. Somit kann ein im Wesentlichen zyklischer Ablauf aus Aufbringen einer neuen Rohmaterial- bzw. Formmassenschicht und dem nachfolgenden Bestrahlen zum Herstellen einer neuen oberste Werkstückschicht realisiert werden, woraufhin erneut eine weitere Rohmaterialschicht auf die zuletzt hergestellte Werkstückschicht aufgebracht wird, usw. Ein Beispiel einer derartigen Beschichteranordnung, das sich speziell auf das zyklische Aufbringen von Formmasse in Form eines Pulvermaterials richtet, findet sich in der EP 2 818 305 A1.

Die Vorrichtung umfasst ferner eine Bestrahlungsanordnung, die dazu eingerichtet ist, die Formmasse auf der Baufläche selektiv mit elektromagnetischer Strahlung zu bestrahlen, um ein Werkstück mittels eines generativen Schichtbauverfahrens herzustellen. Hierzu kann die Formmasse sozusagen ortsabhängig bzw. ortsspezifisch selektiv bestrahlt werden. Bei der elektromagnetischen Strahlung kann es sich um Laserstrahlung handeln, die ferner dazu ausgebildet sein kann, die Formmasse infolge der Bestrahlung zu verfestigen. Die Bestrahlungsanordnung kann allgemein gegenüberliegend zu der Baufläche angeordnet sein, beispielsweise oberhalb davon.

Die Bestrahlungsanordnung umfasst eine Mehrzahl von Bestrahlungseinheiten, wobei die Bestrahlungseinheiten dazu eingerichtet sind, einen ihnen jeweils zugeordneten Einzelbereich der Baufläche zu bestrahlen. Bei den Bestrahlungseinheiten kann es sich um einzelne Einheiten der Bestrahlungsanordnung handeln, die jeweils dazu ausgebildet sind, einen Strahl zu emittieren und/oder auf die Baufläche zu richten. Beispielsweise können die Bestrahlungseinheiten jeweils einen oder mehrere Strahlenaustrittsbereiche umfassen, aus denen ein einzelner Strahl aus der Bestrahlungsanordnung in die Umgebung austritt, um auf die Baufläche zu treffen. Ferner können mehrere Bestrahlungseinheiten an eine gemeinsame Strahlenquelle angeschlossen sein, beispielsweise mittels geeigneter Lichtleiter. Alternativ oder zusätzlich können die Bestrahlungseinheiten eigene Strahlenquellen umfassen.

Gemäß einer Variante kann demnach vorgesehen sein, dass zumindest ausgewählte Bestrahlungseinheiten jeweils einen Lichtleiter umfassen, mittels dem sie an eine gemeinsame Laserstrahlquelle angeschlossen sind, sowie eine optionale Durchlasssteuereinrichtung, um selektiv zu bestimmen, ob ein Strahl tatsächlich von den jeweiligen Bestrahlungseinheit emittiert und auf die Baufläche gerichtet wird. Hierzu kann die Durchlasssteuereinrichtung eine geeignete Shuttereinheit umfassen.

Ebenso kann vorgesehen sein, dass zumindest ausgewählte Bestrahlungseinheiten eine eigene Laserstrahlquelle umfassen. Zum Ermöglichen einer platzsparenden und dichten Anordnung der Strahlenaustrittsbereiche der Bestrahlungseinheiten gegenüberliegend zu der Baufläche können die Strahlenaustrittsbereiche dabei mittels Lichtleitern an innerhalb der Vorrichtung weiter entfernt angeordneten Strahlenquellen der Bestrahlungseinheiten angeschlossen werden. Ebenso kann jedoch vorgesehen sein, dass die jeweiligen Strahlenquellen im Wesentlichen innerhalb oder nahe zu den jeweiligen Strahlenaustrittsbereichen der Bestrahlungseinheiten angeordnet sind. Die Bestrahlungseinheiten umfassen wenigstens eine VCSEL- oder Oberflächenemitter-Einheit, die jeweils wenigstens eine Laserstrahl-emittierende Diode bzw. einen Laserstrahl-emittierenden Halbleiter umfassen. Hierbei können auch mehrere solcher Einheiten auf einzelnen Chips oder Modulen zusammengefasst und somit platzsparend innerhalb der Vorrichtung angeordnet werden.

Die Anzahl der Bestrahlungseinheiten kann mehr als 10, mehr als 20, mehr als 50, mehr als 100, mehr als 500 oder auch mehr als 1000 betragen. Die genaue Anzahl kann je nach der gewünschten Fertigungsgenauigkeit oder Baufeldgröße gewählt werden.

Die Einzelbereiche der Baufläche können sozusagen virtuell festgelegt und den Bestrahlungseinheiten zugeordnet werden. Dabei können die Einzelbereiche eine Anordnung der Bestrahlungseinheiten in der Bestrahlungsanordnung auf der Baufläche wiederspiegeln. Wie nachfolgend erläutert, können die Bestrahlungseinheiten zum Beispiel matrix- oder gitterförmig innerhalb der Bestrahlungsanordnung angeordnet sein, sodass die Einzelbereiche diese Anordnung auf der Baufläche entsprechend abbilden können. Mit anderen Worten können die Einzelbereiche somit virtuelle Matrizen, Raster, Netze oder Gitter auf der Baufläche definieren. Dies gilt insbesondere, wenn die Einzelbereiche einer zugeordneten Bestrahlungseinheit jeweils im Wesentlichen unmittelbar gegenüberliegen. Hierzu können die Einzelbereiche im Wesentlichen derart relativ zu einer entsprechend zugeordneten Bestrahlungseinheit angeordnet sein, dass diese mittels eines geradlinigen Strahlenverlaufs verbindbar sind. Insbesondere können die Einzelbereiche im Wesentlichen unmittelbar gegenüberliegend zu einer entsprechend zugeordneten Bestrahlungseinheit angeordnet sein, sodass diese mittels eines geradlinigen Strahls verbindbar sind, der beispielsweise im Wesentlichen vertikal und/oder orthogonal zu der Baufläche verläuft.

Die genaue Position, Größe und/oder etwaige Überlappungen der Einzelbereiche können ferner flexibel festgelegt werden, zum Beispiel nach Maßgabe einer gewünschten Fertigungsgenauigkeit, einem Strahlenprofil oder einer etwaigen Relativbewegbarkeit von Bestrahlungsanordnung und Baufläche. Wie nachstehend näher ausgeführt, kann auch die Abdeckung bzw. der Ausfüllgrad eines Einzelbereiches durch einen Strahl der jeweiligen Bestrahlungseinheit verschieden gewählt sein. Insbesondere kann eine im Wesentlichen vollständige Abdeckung der Einzelbereiche, eine übermäßige Abdeckung oder eine unvollständige Abdeckung vorgesehen sein. Dabei kann die Strahlquerschnittsfläche insbesondere im Auftreffpunkt ca. 100% der Einzelbereichsfläche entsprechen (vollständige Abdeckung), mehr als 100 % (übermäßige Abdeckung) oder weniger als 100 % (unvollständige Abdeckung).

Schließlich kann zum Erzielen einer möglichst gleichmäßigen und flächigen Verfestigung allgemein eine überlappende Bestrahlung vorgesehen sein, wobei Bauflächenbereiche bzw. Einzelbereiche von wenigstens zwei Bestrahlungseinheiten gemeinsam bestrahlt werden können. Wie nachfolgend diskutiert, können hierzu die Bestrahlungseinheiten aufgrund einer übermäßigen Abdeckung auch benachbarte Einzelbereiche mitbestrahlen und/oder die Einzelbereiche werden überlappend definiert, sodass auch bei einer lediglich vollständigen oder unvollständigen Abdeckung der Einzelbereiche eine überlappende Bestrahlung der Baufläche erzielbar ist.

Die Zuordnung von Einzelbereichen und Bestrahlungseinheiten kann allgemein feststehend sein, beispielsweise aufgrund der Konstruktionsweise der Vorrichtung und insbesondere der konstruktionsbedingten Relativanordnung von Baufläche und Bestrahlungsanordnung. Mit anderen Worten kann die entsprechende Zuordnung vorrichtungsbedingt im Wesentlichen unveränderlich sein. Alternativ oder zusätzlich können auch Möglichkeiten zur flexiblen Einstellung der Relativanordnung von Baufläche und Bestrahlungsanordnung vorgesehen sein, beispielsweise in Form von mechanischen oder elektromechanischen Verstellmechanismen. Allgemein kann dies auch ein nachfolgend erläutertes Variieren der Zuordnung von Einzelbereichen und Bestrahlungseinheiten während des Herstellungsprozesses eines Werkstückes einschließen, beispielsweise da eine Bestrahlungseinheit aufgrund einer entsprechend Relativverstellung wahlweise auch benachbarte Einzelbereiche bestrahlen kann.

Ferner kann vorgesehen sein, dass die Einzelbereiche individuell nur einer einzelnen Bestrahlungseinheiten zugeordnet sind. Allgemein können somit wenigstens soviele Einzelbereiche wie Bestrahlungseinheiten vorgesehen sein. Zumindest unmittelbar benachbarte Einzelbereiche können sich ferner zumindest geringfügig überlappen. Die Form der Einzelbereiche kann ferner im Wesentlichen quadratisch, rechteckig, dreieckig oder kreisförmig sein.

Die Einzelbereiche können ferner allgemein gleich groß ausgebildet sein. Gemäß einer Variante umfasst ein einzelner Einzelbereich maximal ca. 1/10 der Gesamtfläche der Baufläche. Ebenso ist es denkbar, dass ein einzelner Einzelbereich maximal ca. ein 1/100, maximal ca. ein 1/250, maximal ca. ein 1/500, maximal ca. ein 1/750 oder maximal ca. 1/1000 der Gesamtfläche der Baufläche umfasst.

Die emittieren Strahlen der Bestrahlungseinheiten weisen jeweils eine Querschnittsfläche auf, die zwischen ca. 2% und ca. 170% der Fläche eines jeweils zugeordneten Einzelbereichs entsprechen, beispielsweise zwischen ca. 2 % und ca. 100 %. In bekannter Weise können die Strahlen ein im Wesentlichen rundes beziehungsweise kreisförmiges Querschnittsprofil umfassen, woraus sich die entsprechende Querschnittsfläche ergibt. Ferner kann allgemein die Querschnittsfläche des Strahls direkt an der Bestrahlungseinheit zu Grunde gelegt werden, vorzugsweise jedoch die Querschnittsfläche des Strahls am Auftreffpunkt auf der Baufläche bzw. auf dem jeweils zugeordnetem Einzelbereich. Die Größe der Einzelbereiche kann hingegen im Rahmen der genannten Grenzen gewählt sein, wobei die genaue Festlegung zum Beispiel nach Art des verarbeiteten Materials oder der gewünschten Fertigungsgenauigkeit erfolgen kann. Somit kann auch vorgesehen sein, dass die Querschnittsflächen der Strahlen die Fläche eines jeweils zugeordneten Einzelbereiches überschreiten, also mehr als 100 % der Einzelbereichsfläche abdecken.

Dies bedeutet auch, dass ein emittierter Strahl mit etwaigen benachbarten Einzelbereichen überlappen kann, beispielsweise um eine besonders zuverlässige flächige Verfestigung zu ermöglichen. In diesem Fall kann derjenige Einzelbereich als einer Bestrahlungseinheit tatsächlich zugeordnet verstanden werden, der im Wesentlichen vollständig (also zu ca. 100 %) von dem Strahl einer entsprechenden Bestrahlungseinheit abgedeckt wird. Benachbarte Einzelbereiche können aufgrund der vorstehend erläuterten Überlappung hingegen allenfalls anteilig abgedeckt werden (beispielsweise zu jeweils 10 %). Der Vollständigkeit halber sei erwähnt, dass zum Erzielen einer überlappenden Bestrahlung ebenso vorgesehen sein kann, die Einzelbereiche derart festzulegen, dass diese sich zumindest teilweise überlappen. Werden die Flächen der Einzelbereiche beispielsweise zu ca. 100 % von den jeweils zugeordneten Strahlen abgedeckt, kommt es hierbei ebenfalls zu einer überlappenden Bestrahlung.

Durch das Festlegen des Anteils der Strahlenquerschnittsflächen an den Einzelbereichsflächen können auch die vorstehend diskutierten verschiedenen Abdeckungsvarianten der Einzelbereiche erzielt werden (sh. vollständige, übermäßige und unvollständige Abdeckung). Eine Variante sieht dabei vor, mittels den Einzelbereichen die Anordnung der Bestrahlungseinheiten auf der Baufläche widerzuspiegeln, wobei die Einzelbereiche unmittelbar angrenzend aneinander oder geringfügig beabstandet voneinander angeordnet sind. Wie erwähnt, können sich die Einzelbereiche vorzugsweise aber auch überlappen. Decken die Strahlen der Bestrahlungseinheiten die Einzelbereichsflächen in diesen Fällen vollständig zu ca. 100% ab, erfolgt eine im Wesentlichen gleichmäßige flächige Bestrahlung der Baufläche. Ebenso können die Strahlen der Bestrahlungseinheiten aber die Einzelbereiche mit einem Anteil von mehr als 100 % und somit übermäßig abdecken, beispielsweise mit einem Anteil von ca. 120 %. Hierbei können benachbarte Einzelbereiche auch teilweise mitbestrahlt werden, sodass sich die Auftreffpunkte bzw. -flächen der Strahlen auf der Baufläche ebenfalls zumindest geringfügig überlappen können. In den vorstehenden Fällen kann eine flächige Bestrahlung und Verfestigung der Formmasse ferner im Wesentlichen durch einen einzelnen Bestrahlungsimpuls bzw. -schuss erfolgen.

Schließlich können die Strahlen die Einzelbereiche auch nur lediglich unvollständig abdecken, also mit einem Anteil von weniger als 100%. Eine gegebenenfalls gewünschte vollständige Verfestigung der Formmasse in einem Einzelbereich kann aber nach wie vor durch Wärmeleitung innerhalb der Formmasse erreicht werden. Ebenso sind Ablenkungen des Strahls denkbar (dies liegt aber außerhalb des Anspruchsgegenstands), um diesen auf sämtliche Punkte innerhalb eines Einzelbereichs richten zu können und die hiervon eingeschlossene Formmasse vollständig zu verfestigen. Dies kann mittels optischen Ablenkvorrichtungen erfolgen, die beispielsweise Verstelllinsen, Scannerspiegel oder dergleichen umfassen können. Aufgrund der vergleichsweise geringen Größe der Einzelbereiche können hierzu aber lediglich geringe Ablenkungs- bzw. Strahlführungsbewegungen ausreichen. Somit lässt sich nach wie vor eine erhebliche Effizienzverbesserung erreichen im Vergleich zum Führen eines einzelnen Strahls über die komplette Baufläche.

Die Untergrenze des vorstehenden Bereiches für den Anteil der Querschnittsfläche des Strahls an der Fläche des Einzelbereichs kann ebenso ca. 5%, ca. 10 %, ca. 20 %, ca. 30 %, ca. 40 %, ca. 50 %, ca. 60 %, ca. 70 %, ca. 80 %, ca. 90 %, ca. 100 % , ca. 110 %, ca. 120 %, ca. 130 %, ca. 140 %, ca. 150 %, ca. 160 % betragen. Die Obergrenze kann hingegen ca. 160 %, 150 %, ca. 140 %, ca. 130 %, ca. 120 %, ca. 110 %, ca. 100 % ca. 95 %, ca. 90 %, ca. 80 %, ca. 70 %, ca. 60 %, ca. 50 %, ca. 40 %, ca. 30 %, ca. 20 %, ca. 10 %, oder ca. 5 % betragen.

Es versteht sich, dass hierbei auch sämtliche mögliche Kombinationen der vorstehenden Ober- und Untergrenzen vorgesehen sein können, sofern die Ober-oberhalb der Untergrenze liegt, also beispielsweise, dass der Anteil der Strahl-Querschnittsfläche an der Einzelbereich-Fläche zwischen ca. 20 % und ca. 70 % beträgt, zwischen ca. 40 % und ca. 95 %, zwischen ca. 30 % und ca. 90 %, zwischen ca. 50 % und ca. 100 %, zwischen ca. 70 % und ca. 100 %, zwischen ca. 80 % und ca. 100 %, etc.

Man beachte, dass bei bekannten Vorrichtungen mit Scannereinheiten der Durchmesser eines emittierten Laserstrahls typischerweise einige Mikrometer beträgt (zum Beispiel 150 µm), die Baufläche aber mehrere hundert Quadratzentimeter umfasst. Folglich werden die vorstehend erläuterten Anteile der Strahl-Querschnittsflächen an dem zu bestrahlenden Bereich nicht erreicht, da sie vergleichsweise hoch sind.

Die Erfinder haben demnach erkannt, dass anstelle des Vorsehens einzelner Bestrahlungseinheiten, deren Strahl mittels einer Scannereinrichtung entlang der Formmasse geführt werden muss, eine Mehrzahl von Bestrahlungseinheiten vorgesehen sein kann, die jeweils nur vorbestimmte Einzelbereiche der Baufläche bestrahlen. Dabei können die Einzelbereiche vergleichsweise klein gewählt sein, um die Baufläche sozusagen matrixförmig in einzelne Bestrahlungsbereiche bzw. -zonen aufzuteilen, wobei die Einzelbereiche vorzugsweise eine Anordnung der Bestrahlungseinheiten innerhalb der Bestrahlungsanordnung auf der Baufläche virtuell widerspiegeln. Durch zumindest teilweise paralleles und/oder unmittelbar aufeinanderfolgendes Ansteuern der Mehrzahl von Bestrahlungseinheiten können die Einzelbereiche somit in rascher Abfolge oder sogar gleichzeitig zueinander bestrahlt werden, was die Herstellungszeit einer einzelnen Werkstückschicht entsprechend reduzieren kann.

Beispielsweise kann dies ermöglichen, dass zum Herstellen einer linienförmigen Werkstückkante der Strahl einer einzelnen Bestrahlungseinheit nicht mehr mittels einer Scannereinrichtung gemäß dem gewünschten Kantenverlauf vollständig entlang der Formmasse bewegt werden muss. Vielmehr kann dies durch ein Ansteuern benachbarter Bestrahlungseinheiten aus der Mehrzahl von Bestrahlungseinheiten erreicht werden, die bzw. deren zugeordnete Einzelbereiche entlang dem gewünschten Kantenverlauf angeordnet sind. Mit anderen Worten kann das Herstellen der gewünschten Werkstückkante sozusagen "in einem Schuss" erfolgen, wenn die entsprechenden Bestrahlungseinheiten ihre jeweiligen Einzelbereiche gleichzeitig bestrahlen.

Eine Weiterbildung sieht vor, dass die Einzelbereiche derart angeordnet sind, dass sie gemeinsam zumindest einen Teil der Baufläche im Wesentlichen kontinuierlich abdecken. Wie erläutert, können hierzu die Einzelbereiche beispielsweise rechteckförmig gewählt sein und die Baufläche allgemein matrixförmig abdecken. Die Einzelbereiche können ferner unmittelbar aneinander angrenzen und/oder sich zumindest geringfügig überdecken. Insbesondere kann vorgesehen sein, dass die Einzelbereiche wenigstens ca. 50 %, wenigstens ca. 75 %, wenigstens ca. 90 % oder wenigstens ca. 100 % der Baufläche gemeinsam abdecken.

Ferner ist vorgesehen, dass die Bestrahlungseinheiten jeweils derart ausgebildet sind, dass die Strahlen unter einem im Wesentlichen unveränderlichen Winkel emittiert werden. Beispielsweise können die Strahlen im Wesentlichen unter einem Winkel von ca. 20° bis ca. 160° relativ zu der Bestrahlungsanordnung emittiert werden und insbesondere in einem Winkel von ca. 60° bis ca. 120°, ca. 80° bis ca. 100° oder einem Winkel von ca. 90°. Ebenso kann vorgesehen sein, dass die Strahlen unter einem im Wesentlichen unveränderlichen Winkel von ca. 20° bis ca. 160° auf die Baufläche treffen und insbesondere in einem Winkel von ca. 60° bis ca. 120°, von ca. 80° bis ca. 100° oder von ca. 90°.

Erfindungsgemäß ist vorgesehen, dass die Bestrahlungseinheiten und die gesamte Bestrahlungsanordnung frei von Scanner- oder anderen Strahl-Ablenkeinrichtungen ist, wodurch sich der Aufbau entsprechend vereinfacht. Stattdessen ist vorgesehen, die Mehrzahl von Bestrahlungseinheiten (beispielsweise mehr als 50) vorzusehen, die unter einer im Wesentlichen unveränderlichen Ausrichtung Strahlen emittieren und auf die Baufläche richten. Hierdurch kann sozusagen lediglich punktuell beziehungsweise ortsfest auf die Formmasse eingewirkt werden. Aufgrund der erhöhten Anzahl von Bestrahlungseinheiten können diese aber nach wie vor zusammenhängende Bereiche der Formmasse zum Herstellen gewünschter Werkstückschichten gemeinsam verfestigen, insbesondere wenn die jeweils zugeordneten Einzelbereiche entsprechend klein gewählt sind.

Eine Weiterbildung sieht vor, dass die Bestrahlungseinheiten in vorbestimmten Abständen relativ zueinander angeordnet sind, und insbesondere in regelmäßigen und/oder gleichen Abständen relativ zueinander. Die Bestrahlungseinheiten können analog zu den vorstehend diskutierten Varianten der Einzelbereiche angeordnet und relativ voneinander beabstandet sein und insbesondere den Einzelbereichen jeweils gegenüberliegen. In diesem Zusammenhang kann ferner vorgesehen sein, dass die Bestrahlungseinheiten matrix-, gitter- oder netzförmig innerhalb der Bestrahlungsanordnung angeordnet sind. Die Bestrahlungseinheiten können dabei entsprechende Gitter-, Netz- oder allgemeine Überschneidungspunkte des Anordnungsmusters bilden. Ein entsprechendes Anordnen der Bestrahlungseinheiten ermöglicht ein effektives und insbesondere flächendeckendes Bestrahlen der Baufläche, insbesondere wenn größere zusammenhängende Flächen einer Werkstückschicht, die sich über mehrere Einzelbereiche erstrecken, bestrahlt werden sollen.

Die Vorrichtung kann ferner eine Steuereinrichtung umfassen, die dazu ausgebildet ist, nach Maßgabe einer aktuell herzustellenden Werkstückschicht die Bestrahlungseinheiten zu steuern, insbesondere derart, dass vorbestimmte Bestrahlungsmuster auf der Baufläche erzeugt werden. Beispielsweise können die Bestrahlungseinheiten durch die Steuereinrichtung zumindest hinsichtlich des Erzeugens einer verfestigungswirksamen Strahlungsintensität nur selektiv aktiviert werden, je nachdem welche Bereiche der Baufläche beziehungsweise Formmasse zum Herstellen einer gewünschten Werkstückschicht aktuell verfestigt werden sollen. Hierzu kann die Steuereinrichtung in an sich bekannter Weise auf CAD- und/oder daraus abgeleitete Daten des herzustellenden Werkstücks zurückgreifen und diese zum Erzeugen der gewünschten Steuerbefehle optional auch weiterverarbeiten. Das Bestrahlungsmuster kann somit zu einer gewünschten Kontur beziehungsweise Form von zumindest einem Bereich der herzustellenden Werkstückschicht korrespondieren.

In diesem Zusammenhang kann ferner vorgesehen sein, dass die Steuereinrichtung dazu ausgebildet ist, nach Maßgabe einer aktuell herzustellenden Werkstückschicht die Intensität der von den Bestrahlungseinheiten emittierten Strahlung zu steuern. Hierbei kann insbesondere eine Intensitätsvariation zwischen entweder ca. 0 % oder ca. 100 % der maximal verfügbaren Strahlungsintensität der Bestrahlungseinheiten vorgesehen sein, also im Wesentlichen ein selektives Ein- und Ausschalten der Bestrahlungseinheiten. Ebenso kann vorgesehen sein, dass auch Zwischenwerte zwischen ca. 0 % und ca. 100 % der maximal verfügbaren Strahlungsintensität einstellbar sind, also beispielsweise eine stufen- oder schrittförmige und/oder eine kontinuierliche Variation der Strahlungsintensität.

Ferner kann vorgesehen sein, dass die Steuereinrichtung dazu ausgebildet ist, die Intensität der Bestrahlungseinheiten derart zu steuern, dass nur ausgewählte aus der Mehrzahl von Bestrahlungseinheiten eine verfestigungswirksame Strahlung erzeugen. Je nach verwendeter Formmasse und/oder Bestrahlungseinheit (beziehungsweise der davon emittierten Strahlung) kann dabei vorab festgestellt werden, ab wie viel Prozent der maximal verfügbaren Strahlungsintensität tatsächlich eine Verfestigungswirkung erzielt wird. Unterhalb dieser verfestigungswirksamen Strahlungsintensität kann die Strahlung hingegen lediglich eine vor- oder nachwärmende Funktion besitzen, was beispielsweise zum Reduzieren von Eigenspannungen jedoch nach wie vor gewünscht sein kann. Demnach kann vorgesehen sein, dass nur ausgewählte aus der Mehrzahl von Bestrahlungseinheiten mittels der Steuereinrichtung derart selektiv angesteuert werden, dass diese tatsächlich eine Werkstückschicht mit der gewünschten Kontur aus der Formmasse herstellen. Die weiteren Bestrahlungseinheiten können hingegen schlicht in einem nicht aktivierten Zustand verbleiben oder aber derart reduzierte Strahlungsintensitäten aufweisen, dass diese lediglich die Formmasse vor- oder nachwärmen. Es versteht sich, dass die Auswahl verfestigender oder lediglich vor-/ und nachwärmender Bestrahlungseinheiten je aktuell herzustellender Werkstückschicht flexibel variieren kann.

Erfindungsgemäß ist die Steuereinrichtung dazu ausgebildet, die Bestrahlungseinheiten derart zu steuern, dass diese zum Herstellen einer Werkstückschicht aufeinanderfolgend und/oder in mehreren Schritten die Formmasse bestrahlen. Je nach der gewünschten Fertigungsqualität und/oder den gewünschten Werkstückeigenschaften kann auch vorgesehen sein, dass zumindest einzelne Werkstückschichten in mehreren Schritten beziehungsweise "Schüssen" hergestellt werden.

Erfindungsgemäß ist die Steuereinrichtung dazu ausgebildet, die Bestrahlungseinheiten derart zu steuern, dass in einem ersten Bestrahlungsschritt einer erster Anteil einer herzustellenden Werkstückschicht aus der Formmasse gebildet wird und in einem zweiten Bestrahlungsschritt einer zweiter Anteil der herzustellenden Werkstückschicht aus der Formmasse gebildet wird. Der erste und zweite Anteil können in zusammengesetzter Form im Wesentlichen die gesamte herzustellende Werkstückschicht bilden. Ebenso können noch weitere Anteile vorgesehen sein, die in weiteren gesonderten Bestrahlungsschritten hergestellt werden. Die Anteile können dabei im Wesentlichen benachbart zueinander angeordnet sein und/oder sich geringfügig überlappen. In einer Variante ist vorgesehen, dass die ersten und zweiten Anteile schachbrettförmig gewählt sind und in zusammengesetzter Form zumindest einen Bereich der herzustellenden Werkstückschicht gemeinsam abdecken.

Ein Vorteil dieser Variante ist die verringerte Größe der in einem Schritt erwärmten oder sogar aufgeschmolzenen Einzelflächen, was vorteilhaft hinsichtlich der erzielbaren Fertigungsgüte und dem Vermeiden von Eigenspannungen sein kann. Insbesondere können die in einzelnen Bestrahlungsschritten hergestellten Anteile der Werkstückschicht derart gewählt sein, dass großflächige zusammenhängende Aufschmelzbereiche der Formmasse vermieden werden. Dies kann auch als das Vermeiden einer Schmelzseebildung bezeichnet werden.

Eine weitere Variante (außerhalb des Anspruchsgegenstands) sieht vor, dass die Steuereinrichtung dazu ausgebildet ist, die Bestrahlungseinheiten derart zu steuern, dass zum Herstellen einer Werkstückschicht wenigstens ein Bestrahlungsvektor auf der Formmasse erzeugt wird. Die Bestrahlungsvektoren können in bekannter Weise Bestrahlungsverläufe eines Strahls an beziehungsweise auf der Oberfläche der Formmasse betreffen. Diese werden auch als Scanvektoren bezeichnet, zumindest dann, wenn der Strahl einer einzelnen Bestrahlungseinheit durch eine entsprechende Ablenkeinrichtung abgelenkt und entlang der Oberfläche der Formmasse geführt wird. Gemäß der vorliegenden Variante kann aber insbesondere vorgesehen sein, dass beispielsweise unmittelbar benachbarte Bestrahlungseinheiten derart aufeinanderfolgend oder zeitlich versetzt zueinander angesteuert werden, dass sich deren einzelne punktuelle Bestrahlung der Formmasse insgesamt zu einem Bestrahlungsvektor an der Formmassenoberfläche zusammensetzt. Die Steuereinrichtung kann die Bestrahlungseinheiten also derart ansteuern, dass ein Bestrahlungs- bzw. Scanvektor auf der Formmasse durch die einzelnen Auftreffpunkte der Strahlen der Bestrahlungseinheiten sozusagen nachgebildet wird. Der Bestrahlungsvektor kann ferner allgemein linienförmig ausgebildet sein. Hierdurch können beispielsweise äußere Kanten des Werkstücks geformt werden.

Die Bestrahlungseinheiten sind ferner im Wesentlichen stationär innerhalb der Bestrahlungsanordnung angeordnet und parallel zu der Baufläche im Wesentlichen unbeweglich. Auch in diesem Fall können die Bestrahlungseinheiten allgemein frei von Scanner- oder Ablenkeinrichtungen sein. Stattdessen können sie im Wesentlichen ortsfest relativ zu der Baufläche angeordnet sein und, unter einem unveränderlichen Winkel Strahlen auf die Baufläche richten. Nach wie vor kann aber vorgesehen sein, dass die Baufläche relativ zu der Bestrahlungsanordnung bewegbar ist, zum Beispiel um die zunehmende Baugröße des herzustellenden Werkstücks zu kompensieren. Dies kann entlang einer Bewegungsachse erfolgen, die im Wesentlichen orthogonal zu der Baufläche und/oder der Bestrahlungsanordnung verläuft. Insbesondere kann die Bewegungsachse allgemein vertikal verlaufen. Somit kann also vorgesehen sein, dass die Bestrahlungseinheiten entlang der Bewegungsachse betrachtet ebenfalls relativ zu der Baufläche beweglich sind. Erfindungsgemäß sind die Bestrahlungseinheiten aber parallel zu der Baufläche unbeweglich, also innerhalb einer virtuellen Ebene, die parallel zu der Baufläche verläuft und/oder orthogonal zu der Bewegungsachse, keine gesonderten Bewegungen ausführen und keine Bewegungen relativ zu der Baufläche.

Ebenso kann vorgesehen sein, dass die Bestrahlungseinheiten jeweils eine Strahlquelle umfassen. Hierbei kann es sich um eine jeweils eigenständige und/oder einzige Strahlquelle der Bestrahlungseinheiten handeln. Alternativ oder zusätzlich kann die emittierte Strahlung zumindest einiger der Bestrahlungseinheiten mittels einer zusätzlichen Optikeinheit zu einem gemeinsamen Strahl gebündelt werden. Letztere Variante kann insbesondere zum Erhöhen der Gesamtstrahlungsintensität vorteilhaft sein, beispielsweise wenn die einzelnen Bestrahlungsquellen für sich genommen keine für ein Aufschmelzen bzw. Verfestigen ausreichende Strahlungsintensität besitzen. Die Optikeinheit kann allgemein als eine Mikrooptikeinheit ausgebildet sein. Ferner kann die Optikeinheit separat von den Bestrahlungseinheiten ausgebildet und zwischen der Bestrahlungsanordnung und der Baufläche im Strahlenverlauf zwischengeschaltet sein. Ferner kann die Optikeinheit wenigstens eine optische Linse oder diffraktive optische Elemente umfassen, um die Mehrzahl der einzeln emittierten Strahlen zu einem gemeinsamen Strahl zu bündeln, beispielsweise in Form geeigneter Sammellinsen. Zusätzlich können verstellbare Linsen vorgesehen sein, um die Ausrichtung des gebündelten Strahls in gewünschter Weise anzupassen, also beispielsweise dessen Auftreffpunkt auf der Baufläche in gewünschter Weise zu verschieben.

In diesem Zusammenhang kann ferner vorgesehen sein, dass beispielsweise jeweils zwischen 2 oder 10, zwischen 4 oder 20 oder zwischen 10 oder 60 Bestrahlungseinheiten als eine Gruppe zusammengefasst sind, die mittels der Optikeinheit derart wechselwirkt, dass die emittierte Strahlung der einzelnen Bestrahlungseinheiten in der vorstehend geschilderten Weise gebündelt wird. Insbesondere kann die Optikeinheit also je einer entsprechenden Gruppe von Bestrahlungseinheiten eine gesonderte Linse zum Bündeln und/oder eine verstellbare Linse gemäß den vorstehenden Varianten umfassen. Insbesondere können mehrere oder sämtliche Bestrahlungseinheiten der Bestrahlungsanordnung zu einer Mehrzahl entsprechender Gruppen zusammengefasst sein, wobei die Gruppen jeweils eine gleiche Anzahl von Bestrahlungseinheiten umfassen können.

Die Erfindung betrifft ferner ein Verfahren zum Herstellen dreidimensionaler Werkstücke mittels einer Vorrichtung, nach Anspruch 7.

Allgemein kann vorgesehen sein, dass die Vorrichtung, mittels der das Verfahren ausgeführt wird, gemäß jeglichem der vorstehend diskutierten Aspekte ausgebildet ist. Ferner kann das Verfahren jeglichen Schritt umfassen, um die vorstehend geschilderten Betriebszustände und/oder Wirkungen der Vorrichtung auszuführen und bereitzustellen. Im gleichen Sinne kann bei den nachfolgend erläuterten weiteren Verfahrensschritten vorgesehen sein, dass deren Merkmale basierend auf den vorstehenden Ausführungen weitergebildet sein können.

Konkret ist vorgesehen, dass das Verfahren ferner den folgenden Schritt umfasst: Emittieren von Strahlen durch zumindest ausgewählte aus der Mehrzahl Bestrahlungseinheiten unter einem im Wesentlichen unveränderlichen Winkel über eine Mehrzahl von herzustellenden Werkstückschichten. Bei der Mehrzahl von herzustellenden Werkstückschichten kann es sich um aufeinanderfolgende Werkstückschichten handeln. Ebenso kann die Mehrzahl allgemein mehr als 10, mehr als 50 oder mehr als 100 Werkstückschichten umfassen. Ferner ist vorgesehen, dass die Strahlen für jegliche herzustellende Werkstückschicht unter demselben unveränderlichen Winkel emittiert werden.

Ferner kann vorgesehen sein, dass das Verfahren weiterhin den folgenden Schritt umfasst: Steuern der Bestrahlungseinheiten nach Maßgabe einer aktuell herzustellenden Werkstückschicht, insbesondere derart, dass vorbestimmte Bestrahlungsmuster auf der Baufläche erzeugt werden.

Ebenso kann der folgende Schritt vorgesehen sein: Steuern der Intensität der von den Bestrahlungseinheiten emittierten Strahlung nach Maßgabe der aktuell herzustellenden Werkstückschicht.

In diesem Zusammenhang kann ferner vorgesehen sein, dass das Steuern der Intensität der Bestrahlungseinheiten derart erfolgt, dass nur ausgewählte aus der Mehrzahl von Bestrahlungseinheiten eine verfestigungswirksame Strahlung erzeugen.

Weiterhin erfolgt das Steuern der Bestrahlungseinheiten derart, dass diese zum Herstellen einer Werkstückschicht aufeinanderfolgend und/oder in mehreren Schritten die Formmasse bestrahlen.

Erfindungsgemäß erfolgt das Steuern der Bestrahlungseinheiten derart, dass in einem ersten Bestrahlungsschritt ein erster Anteil einer herzustellenden Werkstückschicht aus der Formmasse gebildet wird und in einem zweiten Bestrahlungsschritt ein zweiter Anteil der herzustellenden Werkstückschicht aus der Formmasse gebildet wird.

Schließlich kann das Steuern der Bestrahlungseinheiten derart erfolgt, dass zum Herstellen einer Werkstückschicht wenigstens ein Bestrahlungsvektor auf der Formmasse erzeugt bzw. nachgebildet wird. Es versteht sich, dass die im Zusammenhang mit der Vorrichtung diskutierten Varianten des Steuerns der Bestrahlungseinheiten sich ebenso auf die vorstehend geschilderten Verfahrensschritte beziehen.

Gemäß einer Weiterbildung kann das Verfahren ferner den folgenden Schritt umfassen: Variieren der Zuordnung von Einzelbereichen und Bestrahlungseinheiten während des Herstellungsprozesses eines Werkstückes.

Ein weiterer Aspekt betrifft eine Weiterbildung der Vorrichtungen und des Verfahrens gemäß den vorstehenden Ausführungen zum Verbessern einer Schutzgasführung. Hierzu kann vorgesehen sein, eine Schutzgasströmung entlang der Bearbeitungseinheiten bereitzustellen, was über Fluidleitungsbereiche insbesondere in den Randbereichen der Bestrahlungsanordnung erfolgen kann.

Die Fluidleitungsbereiche können beispielsweise Blenden, Rohre oder andere geeignete Gasführungselemente umfassen. Dabei kann wenigstens ein Fluidleitungsbereich als Schutzgaszuführbereich und wenigstens ein anderer Fluidleitungsbereich als Schutzgasabführbereich ausgebildet sein, wobei eine Schutzgasströmung zwischen diesen Bereichen mittels der vorstehend genannten Gasführungselemente erzeugt werden kann. Die Schutzgasströmung kann demnach als eine im Wesentlichen freie und vorzugsweise geradlinige Strömung entlang einem Bereich der Bestrahlungsanordnung erfolgen, in dem die Bestrahlungseinheiten angeordnet sind. Dabei kann es sich beispielsweise um eine Unterseite der Bestrahlungsanordnung handeln, die der Baufläche unmittelbar zugewandt ist. Allgemein kann das Schutzgas ferner gekühlt sein, um beispielsweise ein Erhitzen der Bestrahlungseinheiten aufgrund von Rückreflexionen durch die Baufläche zu begrenzen. Ebenso kann die Schutzgasströmung der Schweißrauchabfuhr dienen. Ferner kann die Schutzgasströmung im Wesentlich gleichzeitig zu dem Herstellen einer Werkstückschicht bereitgestellt werden und auch darüber hinaus.

In diesem Zusammenhang kann ferner vorgesehen sein, dass die Bestrahlungseinheiten in einzelne Gruppen oder Module unterteilt sind, die jeweils eigene Gasführungselemente und/oder Fluidleitungsbereiche umfassen, um je Modul eine individuelle Schutzgasströmung entlang der jeweiligen Bestrahlungseinheiten zu erzielen. Beispielsweise können benachbarte Module durch entsprechende Blenden voneinander getrennt sein, sodass die Schutzgasströmung nicht von einem Modul zum nächsten gelangt. Hierbei kann auch vorgesehen sein, eine Kühlung des Schutzgases je Modul individuell anzupassen, beispielsweise in Abhängigkeit eines Aktivierungszustandes und/oder eines erwarteten oder bereits erfolgten Energieeintrages mittels der jeweiligen Bestrahlungseinheiten in die Formmasse.

Wie erwähnt, kann übergeordnet vorgesehen sein, dass die Vorrichtung und das Verfahren eine verfestigungswirksame Bestrahlung der Formmasse mittels der Bestrahlungseinheiten der Bestrahlungsanordnung ermöglichen. Insbesondere kann vorgesehen sein, dass das Herstellen des Werkstückes allein mittels der entsprechenden Bestrahlungseinheiten möglich ist und das nicht auf zusätzliche oder externe Bestrahlungseinheiten zurückgegriffen werden muss. Prinzipiell ist es aber ebenso denkbar, dass sie Bestrahlungseinheiten lediglich als Vor- und/oder Nachwärmeinheiten vorgesehen sind und das zusätzliche oder externe Bestrahlungseinheiten zur eigentlichen Verfestigung der Formmasse bereitgestellt sind, beispielsweise in Form bekannter Laserquellen und Scannereinheiten. Mittels der vorstehend diskutierten Anordnung und Steuerung der Bestrahlungseinheiten lässt sich auch in diesem Fall nach wie vor eine signifikante Steigerung der Produktionseffizienz erreichen, beispielsweise da individuelle Vorwärm-Bestrahlungsmuster vorab auf der Formmasse erzeugbar sind. Die vorgewärmten Bereiche können mittels weiterer Bestrahlungseinheiten aufgrund des bereits erfolgten Energieeintrages anschließend schneller abgefahren werden, um eine aktuell gewünschte Verfestigung zu erzielen. Ein weiterer Vorteil eines solchen Vorwärmens ist, dass das Pulver bis kurz vor dem Phasenübergang erhitzt und dann mit einem kleinen Leistungssteigerungsimpuls geschmolzen beziehungsweise verfestigt werden kann. Hierdurch kann ein kontrolliertes Aufschmelzen erreicht werden.

Die Erfindung betrifft schließlich das Verwenden einer Vorrichtung nach einem der vorstehenden Aspekte zum Herstellen eines dreidimensionalen Werkstückes mittels eines generativen Schichtbauverfahrens. Hierunter ist insbesondere eine derartige Verwendung zu verstehen, bei der mittels der Bestrahlungseinheiten der Vorrichtung eine verfestigungswirksame Bestrahlung der Formmasse erfolgt.

Im Folgenden werden bevorzugte Ausführungsformen der Erfindung anhand der beiliegenden Figuren diskutiert, wobei:
- Figuren 1A-1D: einen zyklischen Ablauf zum Herstellen einer Werkstückschicht mittels einer Vorrichtung gemäß einem ersten Ausführungsbeispiel zeigen;
- Figur 1E: eine Ansicht einer Unterseite einer Bestrahlungsanordnung gemäß dem ersten Ausführungsbeispiel zeigt;
- Figuren 2A-2C: Beispiele von Belichtungsmustern zum Herstellen einer Werkstückschicht mittels der Vorrichtung gemäß dem ersten Ausführungsbeispiel zeigen;
- Figur 3: eine Vorrichtung gemäß einem zweiten Ausführungsbeispiel zeigt, bei der zusätzlich eine Optikeinheit zwischen der Bestrahlungsanordnung und der Baufläche vorgesehen ist;
- Figur 3A: eine Vorrichtung gemäß einem dritten Ausführungsbeispiel zeigt, insbesondere um Möglichkeiten zum Strahlaufweiten einzelner Bestrahlungseinheiten sowie mögliche Zuordnungen zu Einzelbereichen zu zeigen;
- Figur 4: eine Vorrichtung gemäß einem vierten Ausführungsbeispiel zeigt, die ein weiteres Beispiel für eine Schutzgasführung entlang der Bestrahlungsanordnung der Vorrichtung zeigt,
- Figur 5: eine Vorrichtung gemäß einem fünften Ausführungsbeispiel zeigt, bei der die Strahlquellen der Bestrahlungseinheiten in entfernten Bereichen der Vorrichtung angeordnet sind und wobei auch eine Bündelung der emittierten Strahlen gezeigt ist; und
- Figuren 6A-6B: eine Vorrichtung gemäß einem sechsten und siebten Ausführungsbeispiel zeigen, wobei die von der Bestrahlungsanordnung emittierten Strahlen variablen Einzelbereichen zuordenbar sind.

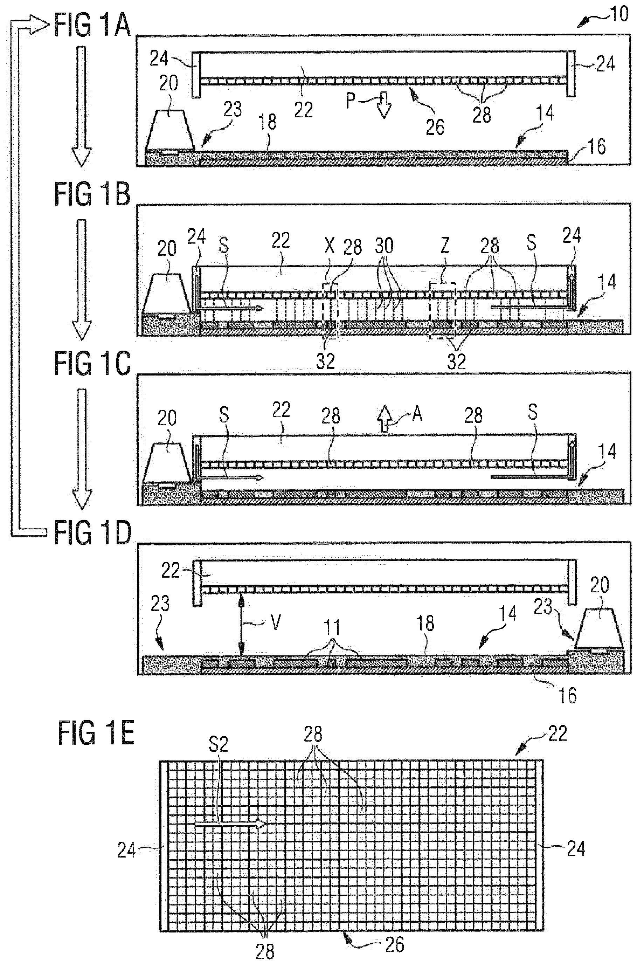

In den Figuren 1A-1D ist eine Vorrichtung 10 gemäß einem ersten Ausführungsbeispiel gezeigt. Die Vorrichtung 10 umfasst eine Baufläche 14, die auf einem feststehenden Träger 16 ausgebildet ist. In Figur 1A erkennt man, dass auf der Baufläche 14 bereits eine Schicht einer zu verfestigenden Formmasse 18 aufgetragen wurde, die vorliegend ein Pulvermaterial umfasst. Hierzu ist eine an sich bekannte Beschichtervorrichtung 20 vorgesehen, die in Figur 1A nahe einem linken Endbereich 23 des Trägers 16 und somit außerhalb der eigentlich für das Herstellen eines Werkstückes nutzbaren Baufläche 14 angeordnet ist. Die Beschichtervorrichtung 20 trägt in an sich bekannter Weise zyklisch neue Schichten der pulverförmigen Formmasse 18 auf den Träger 16 auf, um somit ein Werkstück mittels eines generativen Schichtbauverfahrens herzustellen.

Zur schichtweisen Verfestigung der Formmasse 18 ist ferner eine Bestrahlungsanordnung 22 vorgesehen, die oberhalb von und somit gegenüberliegend zu der Baufläche 14 angeordnet ist. Die Bestrahlungsanordnung 22 ist gemäß dem Pfeil P relativ zu der Baufläche 14 entlang einer vertikalen Bewegungsachse bewegbar. Ferner umfasst die Bestrahlungsanordnung 22 an ihren in Figur 1A äußeren Randbereichen jeweils einen Fluidleitungsbereich 24, um eine Schutzgasströmung S (sh. Fig. 1B) entlang einer der Baufläche 14 zugewandten Unterseite 26 der Bestrahlungsanordnung 22 zu erzeugen.

In Figur 1A erkennt man ferner, dass die Bestrahlungsanordnung 22 an ihrer Unterseite 26 mehrere Bestrahlungseinheiten 28 aufweist, wobei aus Gründen der Übersichtlichkeit nur einzelne dieser Bestrahlungseinheiten 28 mit einem entsprechenden Bezugszeichen versehen sind. Die Bestrahlungseinheiten 28 sind allgemein unmittelbar angrenzend aneinander und in regelmäßigen Abständen relativ zueinander angeordnet. Insbesondere ist auch in einer vertikalen Richtung zu der Blattebene von Figur 1A vorgesehen, dass je einzelner Bestrahlungseinheit 28 eine Reihe weiterer Bestrahlungseinheiten 28 angeordnet ist. Entsprechend bilden die Bestrahlungseinheiten 28 ein matrixförmiges Raster oder, mit anderen Worten, ein matrixförmiges Netz oder Gitter an der Unterseite 26 der Bestrahlungsanordnung 22.

Dies verdeutlicht sich ferner aus der Ansicht von Figur 1E, die eine Draufsicht auf die Unterseite 26 der Bestrahlungsanordnung 22 zeigt. Dabei verläuft die Blickachse entgegengerichtet zum Pfeil P aus Figur 1A. Man erkennt das vorstehend erläuterte matrixförmige Raster beziehungsweise Netz von Bestrahlungseinheiten 28 an der Unterseite 26 sowie die beidseitigen Fluidleitungsbereiche 24 an den entsprechenden Randbereichen der Bestrahlungsanordnung 22. In dieser Darstellung sind erneut nur ausgewählte der Bestrahlungseinheiten 28 mit einem entsprechenden Bezugszeichen versehen. Ebenso stimmt die Anzahl von Bestrahlungseinheiten 28 nicht exakt mit der Darstellung gemäß den Figuren 1A-D überein. Die Bestrahlungseinheiten 28 sind ferner allgemein rechteckig dargestellt, können jedoch auch andere Formen aufweisen und zum Beispiel rund oder kreisförmig ausgebildet sein.

Im vorliegenden Fall bilden die Bestrahlungseinheiten 28 jeweils einen Strahlaustrittsbereich der Bestrahlungsanordnung 22, um je Bestrahlungseinheit 28 einen einzelnen Strahl 30 zu emittieren und auf die Baufläche 14 zu richten (siehe nachfolgende Diskussion von Figur 1B). Hierzu umfassen die Bestrahlungseinheiten 28 jeweils eine eigene Laser-Strahlquelle. Wie vorstehend diskutiert, ist es aber ebenso denkbar, dass die Bestrahlungseinheiten 28 mittels Lichtleitern an entfernt angeordnete Strahlquellen angeschlossen sind.

Zurückkommend auf die Figuren 1A-B erkennt man, dass die Bestrahlungsanordnung 22 in einem ersten Schritt gemäß dem Pfeil P in Richtung der Baufläche 14 bewegt wird. Dies dient dazu, den Abstand zwischen der Bestrahlungsanordnung 22 und der Baufläche 14 zu verringern, um den Energieeintrag in die Formmasse 18 mittels der Bestrahlungseinheiten 28 zu erhöhen. Eine entsprechende Endposition der Bestrahlungsanordnung 22 ist in Figur 1B gezeigt.

Aus Figur 1B verdeutlicht sich ferner, dass über die beidseitigen Fluidleitungsbereiche 24 eine Schutzgasströmung gemäß den Pfeilen S erzeugt wird. Diese verläuft entlang der Unterseite 26 der Bestrahlungsanordnung 22 vom linken zum rechten Fluidleitungsbereich 24 in Figur 1B. Entsprechend dient der in Figur 1B linke Fluidleitungsbereich 24 als Schutzgaszuführbereich und der rechte Fluidleitungsbereich 24 als Schutzgasabführbereich. Beide Fluidleitungsbereiche 24 können ferner an ein nicht dargestelltes Leitungssystem angeschlossen sein, um einen Schutzgaskreislauf zwischen den Fluidleitungsbereichen 24 zu realisieren. Hierbei kann das Schutzgas auch gekühlt werden, um die Temperatur der Bestrahlungseinheiten 28 zu reduzieren, die sich aufgrund von Rückreflexionen der emittierten Strahlung durch die Baufläche 14 in unerwünschter Weise erhöhen kann.

In Figur 1B erkennt man ferner, dass nur ausgewählte aus der Mehrzahl von Bestrahlungseinheiten 28 jeweils einen einzelnen Strahl 30 emittieren, der auf die oberste Schicht der Formmasse 18 auf der Baufläche 14 trifft (sh. a. Fig. 1A). Erneut sind lediglich ausgewählte aus der Mehrzahl der emittierten Strahlen 30 mit einem entsprechenden Bezugszeichen versehen. Die Strahlen 30 sind dabei gradlinig und vertikal nach unten gerichtet und treffen somit nach einer geringstmöglichen Distanz auf die Baufläche 14 auf, sodass eine definierte Energieeinbringung ermöglicht wird. Insbesondere verlaufen die Strahlen 30 jeweils in einem Winkel von ca. 90° relativ zu einer Ebene der Bestrahlungsanordnung 22 beziehungsweise zu deren Unterseite 26 und treffen ebenso in einem Winkel von ca. 90° relativ zu der Baufläche 14 auf letztere auf (beziehungsweise in einem Winkel von ca. 90° relativ zu einer obersten Schicht der Formmasse 18).

Dieser Auftreff- beziehungsweise Emittierwinkel ist allgemein unveränderlich, sodass die Bestrahlungseinheiten 28 jeweils ortsfeste und individuell zugeordnete Einzelbereiche 32 der Baufläche 14 bestrahlen, die ihnen entlang einer vertikalen Achse betrachtet unmittelbar gegenüberliegen. Dies verdeutlicht sich aus dem strichliniert umrandeten Bereich X in Figur 1B, der das Bestrahlen eines unmittelbar gegenüberliegenden Einzelbereichs 32 der Baufläche 14 durch eine einzelne Bestrahlungseinheiten 28 zeigt.

Wie nachfolgend noch näher erläutert, legen die Einzelbereiche 32 der Baufläche 14 somit eine virtuelle Unterteilung der Baufläche fest, die zu der matrixförmigen Anordnung der Bestrahlungseinheiten 28 an der Unterseite 26 der Bestrahlungsanordnung 22 korrespondiert. Mit anderen Worten ist die Baufläche 14 durch die Einzelbereiche 32 analog zu dem matrixförmigen Raster aus Figur 1E virtuell in einzelne Bestrahlungszonen unterteilt, die jeweils durch eine entsprechend gegenüberliegende Bestrahlungseinheiten 28 bestrahlt werden können.

In den Figuren nicht näher dargestellt ist, dass das allgemein kreisförmige Querschnittsprofil der Strahlen 30 eine Fläche definiert, die ca. 100% der Fläche eines Einzelbereichs 32 entspricht, wobei die Größe der Strahlen-Querschnittsfläche am Auftreffpunkt auf der Baufläche 14 betrachtet wird. Dies reicht aus, um das gesamte Formmassenmaterial innerhalb eines Einzelbereichs 32 zu verfestigen, insbesondere wenn die Bestrahlung mit einer ausreichenden Intensität und Dauer erfolgt. Insbesondere kann dadurch die Formmasse 18 in benachbarten Einzelbereichen 32 zu einer zusammenhängenden Werkstückschicht verfestigt werden. Dies verdeutlicht sich beispielsweise aus dem Bereich Z in Figur 1B, in dem zwei benachbarte Einzelbereiche 32 gleichzeitig durch zwei individuell zugeordnete Bestrahlungseinheiten 28 bestrahlt werden. In der Folge verbindet sich die von den Einzelbereichen 32 eingeschlossene Formmasse zu einem zusammenhängenden verfestigten Bereich der herzustellenden Werkstückschicht.

Zusammengefasst ergibt sich aus Figur 1B, dass zum Verfestigen der Formmasse 18 für das Herstellen einer konkreten einzelnen Werkstückschicht lediglich einzelne aus der Mehrzahl von Bestrahlungseinheiten 28 selektiv ausgewählt werden, um einen entsprechenden Strahl 30 auf die vorbestimmten und fest zugeordneten Einzelbereiche 32 der Baufläche 14 zu richten. Somit kann das in Figur 1B gezeigte Werkstückschicht-individuelle Bestrahlungsmuster erzeugt werden, bei der nur die dunkel dargestellten Bereiche der Formmasse 18 selektiv verfestigt werden, nicht aber die verbleibenden hell dargestellten Bereiche. Durch ein im Wesentlichen gleichzeitiges Ansteuern der Bestrahlungseinheiten 28 kann die gesamte Werkstückschicht somit in einem einzigen Schritt beziehungsweise Schuss hergestellt werden (nicht Teil der Erfindung), was die Produktionszeit je Schicht erheblich reduziert.

Die Auswahl geeigneter Bestrahlungseinheiten 28 je Werkstückschicht erfolgt dabei mittels einer nicht näher dargestellten Steuereinrichtung. Diese identifiziert in bekannter Weise basierend auf CAD- oder anderen geeigneten Werkstückdaten die je aktuell herzustellender Werkstückschicht zu bestrahlenden Bereiche der Formmasse 18. Ferner ermittelt die Steuereinrichtung, welche Einzelbereiche 32 mit den entsprechend zu bestrahlenden Bereichen der Formmasse 18 zusammenfallen und welche Bestrahlungseinheiten 28 diesen Einzelbereichen 32 jeweils zugeordnet sind. Anschließend werden diese ermittelten Bestrahlungseinheiten 28 angesteuert, um jeweils einen Strahl 30 zu emittieren und die Formmasse in ihren entsprechend zugeordneten Einzelbereichen 32 ortsspezifisch zu verfestigen.

Figur 1C zeigt einen Zustand, in dem das Herstellen einer einzelnen Werkstückschicht beendet ist. Die Schutzgasströmung S wird dabei zunächst über einen gewissen Zeitraum aufrechterhalten, insbesondere um eine ausreichende Kühlung der Bestrahlungseinheiten 28 sowie eine zuverlässige Schweißrauchabfuhr zu gewährleisten. Anschließend wird die Bestrahlungsanordnung 22 gemäß dem Pfeil A vertikal nach oben und von der Baufläche 14 weg bewegt und in ihrer Ausgangsstellung gemäß Figur 1A oberhalb der Baufläche 14 positioniert. Dies bedeutet, dass ein ausreichender Zwischenraum beziehungsweise Abstand V (sh. Fig. 1D) zwischen der Bestrahlungsanordnung 22 und der Baufläche 14 hergestellt wird, sodass die Beschichteranordnung 20 zum Aufbringen einer neuen Schicht von Formmasse 18 aus der Position nahe des in den Figuren 1A-D linken Endbereichs 23 des Trägers 16 entlang der Baufläche 14 bewegt werden kann.

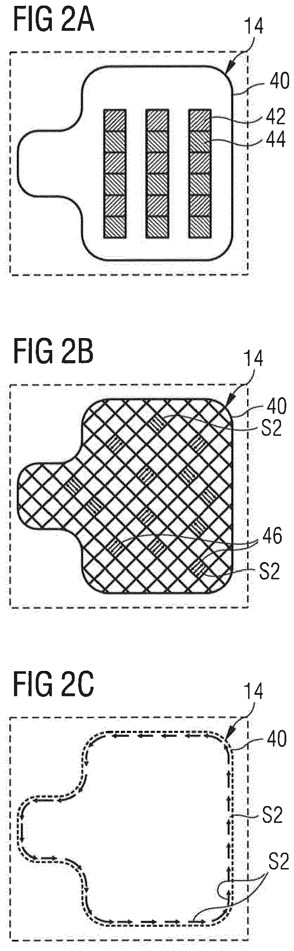

Wie in Figur 1D dargestellt, erreicht die Beschichteranordnung 20 anschließend eine Position nahe des rechten Endbereichs 23 des Trägers 16. Ferner wurde eine neue hell dargestellte formlose Pulverschicht aufgetragen, die auch die dunkel dargestellten und gemäß Figur 1B selektiv verfestigten Einzelbereiche 32 abdeckt. Diese Pulverschicht kann im Folgenden erneut selektiv verfestigt werden. In den Figuren 2A-C sind Beispiele für einzelne Bestrahlungsmuster und -schritte zum Herstellen einer Werkstückschicht gezeigt. In den Figuren 2A-C ist dabei die Kontur 40 einer herzustellenden Werkstückschicht auf der lediglich schematisch angedeuteten Baufläche 14 gezeigt. Die Blickachse entspricht dabei dem Pfeil P aus Figur 1A auf die Baufläche 14.

In Figur 2A erkennt man, dass die mittels der Kontur 40 umrandete Werkstückschicht zunächst in zwei Anteile 42,44 unterteilt ist, die mit verschiedenen Schraffuren abgebildet sind und die jeweils mehrere einzelne rechteckförmige Bereiche der Baufläche 14 umfassen. Aus Darstellungsgründen sind erneut lediglich einzelne Bereiche der jeweiligen Anteile 42,44 mit einem entsprechenden Bezugszeichen versehen. Man erkennt, dass die Anteile 42,44 im Wesentlichen schachbrettförmig relativ zueinander angeordnet sind. Zum Herstellen der Werkstückschicht ist vorgesehen, dass in einem ersten Schritt zunächst lediglich die einzelnen Bereiche gemäß dem Anteil 42 von den entsprechend gegenüberliegenden Bestrahlungseinheiten 28 bestrahlt werden. Dies erfolgt erneut mittels der nicht dargestellten Steuereinrichtung, die diejenigen Einzelbereiche 32 ermittelt, die von dem entsprechenden Anteil 42 abgedeckt werden, sowie die dazugehörigen Bestrahlungseinheiten 28. In einem zweiten Schritt werden anschließend die Bereiche gemäß dem zweiten Anteil 44 bestrahlt. Das schachbrettförmige Anordnen sowie das Bestrahlen in zwei getrennten Schritten ermöglicht, dass in den jeweiligen Schritten lediglich reduzierte Anteile beziehungsweise Flächen einer Werkstückschicht 40 verfestigt werden. Dies kann vorteilhaft sein, um Herstellungsfehler, wie beispielsweise Eigenspannungen im Werkstück, oder aber das Erzeugen großflächig zusammenhängender Bereiche aus aufgeschmolzenem Material zu vermeiden (sogenannte Schmelzseen).

Es versteht sich, dass die Anteile 42,44 auch derart gewählt und relativ zueinander angeordnet sein können, dass diese die gesamte von der Kontur 40 umrandete Werkstückschicht 44 abdecken. Ebenso können zusätzliche Anteile vorgesehen sein, um die Lücken zwischen den Anteilen 42,44 zueinander sowie zu der Kontur 40 zu schließen.

In Figur 2B ist erneut die Kontur 40 gezeigt, die eine aktuell herzustellende Werkstückschicht umgibt. Diese ist mittels eines virtuellen Rasters unterteilt, dass einzelne Zellen 46 definiert. Diese Zellen 46 sollen zum Erzielen gewünschter Werkstückeigenschaften jeweils einzeln bestrahlt werden und zwar mittels der in Figur 2B angedeuteten einzelnen Scanvektoren S2. Die Scanvektoren S2 fahren in an sich bekannter Weise jeweils eine einzelne Zelle 46 linienförmig ab, um die darin enthaltene Formmasse 18 zu verfestigen.

Wie in Figur 1E angedeutet, können derartige Scan- beziehungsweise Bestrahlungsvektoren S2 auch mittels der vorliegenden Bestrahlungsanordnung 22 erzeugt werden. Hierzu werden von der Steuereinrichtung diejenigen Einzelbereiche 32 ermittelt, durch die ein zu erzeugender Bestrahlungsvektor S2 verläuft, und anschließend auch die den jeweiligen Einzelbereichen 32 zugeordneten Bestrahlungseinheiten 28. Anschließend werden diese Bestrahlungseinheiten 28 unmittelbar aufeinanderfolgend beziehungsweise leicht zeitlich versetzt oder, anders ausgedrückt, wellenförmig angesteuert, um den gewünschten Bestrahlungsverlauf gemäß den Vektoren S2 auf der Formmasse 18 zu erzeugen.

In Figur 1E ist lediglich beispielhaft gezeigt, dass drei unmittelbar benachbarte und aneinander angrenzende Bestrahlungseinheiten 28 zeitlich aufeinanderfolgend angesteuert werden können, um den angedeuteten Bestrahlungsvektor S2 zu erzeugen. Hierzu wird zunächst die am weitesten links positionierte Bestrahlungseinheit 28 aktiviert, entlang derer sich der Bestrahlungsvektor S2 erstreckt, und unmittelbar darauffolgend die mittige und schließlich die am weitesten rechts positionierte Bestrahlungseinheit 28.

Es versteht sich, dass die in Figur 2B gezeigten einzelnen Bestrahlungsvektoren S2 auch gleichzeitig erzeugt werden können und dass darauffolgend in weiteren einzelnen Zellen 46 analoge Bestrahlungsvektoren S2 erzeugt werden können, bis schließlich der gesamte von der Kontur 40 eingeschlossene Bereich bestrahlt und verfestigt wurde.

In Figur 2C ist ferner eine Möglichkeit gezeigt, um die Kontur 40 selbst und somit einen äußeren Kantenbereich der Werkstückschicht zu bilden. Hierzu werden einzelne Bestrahlungsvektoren S2 festgelegt, die sich mit einer im Wesentlichen identischen Länge entlang der Kontur 40 erstrecken. Anschließend werden erneut diejenigen Einzelbereiche 32 ermittelt, die jeweils von einem entsprechendem Bestrahlungsvektor S2 durchlaufen werden, sowie die jeweils zugeordneten Bestrahlungseinheiten 28. Diese können dann in der vorstehend beschriebenen Weise aufeinanderfolgend angesteuert werden, um die Bestrahlungsvektoren S2 auf der Baufläche 14 zu erzeugen.

Insbesondere kann vorgesehen sein, dass sämtliche Bestrahlungsvektoren S2 in Figur 2C im Wesentlichen gleichzeitig erzeugt werden. Dieses gleichzeitige Erzeugen bei einer reduzierten Länge der Bestrahlungsvektoren S2 ermöglicht, dass die gesamte Kante entlang der Kontur 40 mit einer äußerst geringen Zeitdauer hergestellt werden kann. Mit anderen Worten ermöglicht die Mehrzahl von Bestrahlungseinheiten 28 eine parallele beziehungsweise gleichzeitig erfolgende gestückelte Konturfahrt, wodurch sich die Gesamtbearbeitungsdauer verringert. Dies gilt insbesondere im Vergleich zu Lösungen, bei dem die gesamte Kontur 40 mittels dem Strahl einer einzigen Strahlenquelle komplett abgefahren werden muss.

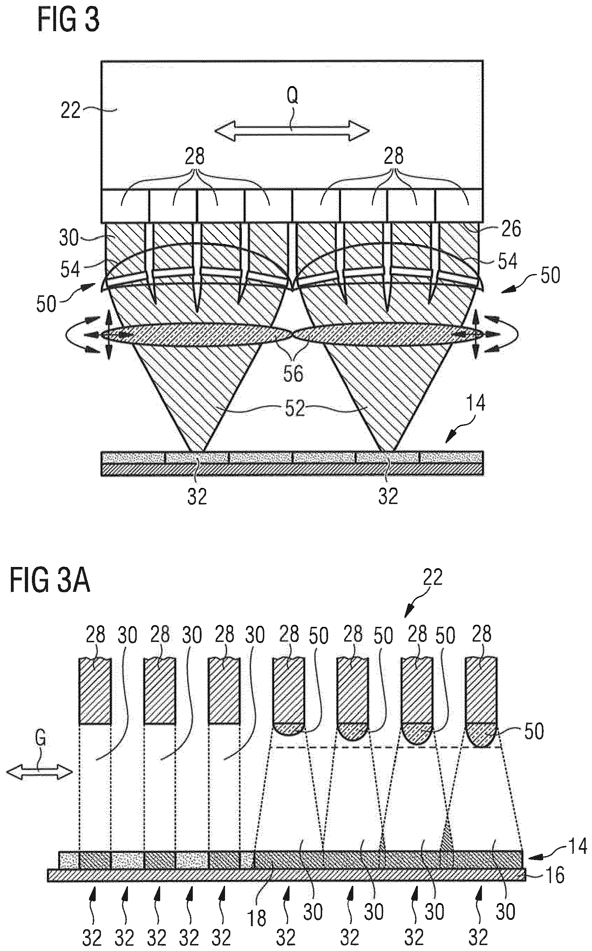

In Figur 3 ist eine Bestrahlungsanordnung 22 gemäß einer weiteren Ausführungsform schematisch dargestellt. Man erkennt, dass die Bestrahlungsanordnung 22 erneut an ihrer der Baufläche 14 zugewandten Unterseite 26 mehrere Bestrahlungseinheiten 28 umfasst. Diese erzeugen wiederum jeweils einen geradlinigen und senkrecht zu der Baufläche 14 verlaufenden Strahl 30, der unter einem unveränderlichen Winkel aus den Bestrahlungseinheiten 28 austritt. Um die Strahlungsintensität zu erhöhen, werden die Strahlen 30 von mehreren einzelnen Bestrahlungseinheiten 28 mittels einer Optikeinheit 50 zu einem einzelnen verstärkten Strahl 52 zusammengefasst. Im gezeigten Fall werden vier mal vier Bestrahlungseinheiten 28 zu einer einzelnen Gruppe zusammengefasst.

In der Ansicht von Figur 3 ist dabei lediglich eine äußerste Reihe von vier Bestrahlungseinheiten 28 gezeigt und die weiteren Bestrahlungseinheiten 28 sind in die Blattebene hinein versetzt. Ferner ist für jeweils eine Gruppe von vier mal vier Bestrahlungseinheiten 28 eine Sammellinse 54 gezeigt, welche die einzelnen Strahlen 32 zu dem verstärkten Strahl 52 bündelt. Für jede Gruppe von vier mal vier Bestrahlungseinheiten 28 umfasst die Optikeinheit 50 ferner eine Verschiebelinse 56, die die Fokusposition bzw. Auftreffpunkt des verstärkten Stahls 52 auf der Formmasse 18 gemäß den in Figur 3 angedeuteten Achsen einstellen kann. Somit kann der verstärkte Strahl 52 (und somit eine entsprechend zusammengefasste Gruppe von vier mal vier Bestrahlungseinheiten 28) erneut einem vorbestimmten Einzelbereich 32 der Baufläche 14 zugeordnet sein. Ferner kann die Bestrahlungsanordnung 22 gemäß dem Pfeil Q insgesamt parallel zu der Baufläche 14 bewegbar sein, sodass ein verstärkter Strahl 52 auch anderen Einzelbereichen 32 der Baufläche 14 flexibel zuordenbar ist.

Man erkennt ferner, dass weder die einzelnen Strahlen der Bestrahlungseinheiten 28 noch der verstärkte Strahl 52 den jeweils zugeordneten Einzelbereich 32 vollständig abdecken. Mit anderen Worten füllen die entsprechenden Strahlquerschnittsflächen die Fläche eines zugeordneten Einzelbereichs 32 zu weniger als 100% und genauer gesagt lediglich zu ca. 30% aus. Eine vollständige Verfestigung der Formmasse in einem jeweiligen Einzelbereich 32 kann dennoch dadurch erreicht werden, dass der Strahlauftreffpunkt mittels der Verschiebelinse 56 variiert wird, sodass er auf sämtliche Punkte innerhalb eines Einzelbereichs richtbar ist.

Es versteht sich, dass die in Figur 3 gezeigte Anzahl von Bestrahlungseinheiten 28 lediglich beispielhaft ist und dass insgesamt eine deutlich höhere Anzahl von Bestrahlungseinheiten 28 vorgesehen sein kann, die wiederum in einem matrixförmigen Raster analog zu Figur 1E angeordnet sein können.

In Figur 3A ist ein weiteres Ausführungsbeispiel gezeigt, um Möglichkeiten zum Strahlaufweiten einzelner Bestrahlungseinheiten 28 sowie dem Abdecken von Einzelbereichen 32 zu erläutern. Man erkennt erneut den Träger 16, der die Lage der Baufläche 14 definiert, sowie eine darauf angeordnete Formmassenschicht 18. Die Bestrahlungseinheiten 28 emittieren jeweils einen Strahl 30, der auf einen gegenüberliegenden Einzelbereich 32 der Baufläche 14 gerichtet ist. Lediglich beispielhaft ist dabei gezeigt, dass die Strahlen 30 der Bestrahlungseinheiten 28 in unterschiedlichem Maße aufgeweitet werden. Allgemein kann stattdessen vorgesehen sein, dass bei einer Mehrzahl von Bestrahlungseinheiten 28 jede der Bestrahlungseinheiten 28 einen Strahl gemäß lediglich einem der in Figur 3A gezeigten Beispiele emittiert, also dass die Strahlaufweitung innerhalb der gesamten Bestrahlungsanordnung 22 einheitlich erfolgt.

Konkret ist bei den in Figur 3A linken drei Bestrahlungseinheiten 28 vorgesehen, dass diese einen gegenüberliegenden Einzelbereich 32 am Auftreffpunkt im Wesentlichen vollständig zu 100 % abdecken. Dabei ist eine Mehrzahl von Einzelbereichen 32 gezeigt, von denen jedoch nicht sämtliche bestrahlt werden. Beispielsweise ist zwischen den in Figur 3A (linke Hälfte) beiden ersten bestrahlten Einzelbereichen 32 ein Einzelbereich 32 angeordnet, der aktuell nicht bestrahlt wird. Um die Baufläche 14 jedoch vollständig bestrahlen zu können, kann die Bestrahlungsanordnung 22 gemäß dem Pfeil G parallel zu der Baufläche 14 verschoben werden. In der Folge können die Bestrahlungseinheiten 28 auch die weiteren Einzelbereiche 32 bestrahlen, die im gezeigten Zustand unbestrahlte Lücken bilden.

Die in Figur 3A rechten vier Bestrahlungseinheiten 28 weisen jeweils Optikeinheiten 50 in Form von Mikrolinsen auf, um die emittierten Strahlen 30 in unterschiedlichem Maße aufzuweiten. Erneut kann aber vorgesehen sein, dass sämtliche Bestrahlungseinheiten 28 innerhalb der Bestrahlungsanordnung 22 auch gleichartige Mikrolinsen 50 aufweisen und somit gleichartig aufgeweitete Strahlen 30 emittieren. Auch in diesem Fall ist vorgesehen, dass die emittierten Strahlen 30 jeweils zugeordnete Einzelbereiche 32 am Auftreffpunkt im Wesentlichen vollständig zu 100 % abdecken. Allerdings sind die Einzelbereiche 32 in diesem Fall überlappend angeordnet, was sich insbesondere bei den in Figur 3A am weitesten rechts angeordneten Bestrahlungseinheiten 28 verdeutlicht. Durch dieses Überlappen kann eine zuverlässige flächige Verfestigung der Formmasse 18 erreicht werden, da beispielsweise die beiden rechten Einzelbereiche 32 in Fig. 3A von jeweils zwei der Bestrahlungseinheiten 28 bestrahlt werden.

Wie vorstehend diskutiert, ist es jedoch ebenso denkbar, die Einzelbereiche 32 lediglich angrenzend aneinander und nicht überlappend anzuordnen und eine übermäßige Strahlabdeckung der jeweiligen Einzelbereiche 32 von mehr als 100 % am Auftreffpunkt vorzusehen (bspw. ein Verhältnis von 150% der auftreffenden Strahlenflächen zu den jeweiligen Flächen der Einzelbereiche 32). Diese Variante ist in Fig. 3A nicht gesondert dargestellt. Die entsprechende virtuelle Unterteilung der Baufläche 14 in die Einzelbereiche 32 wäre aber vergleichbar zu dem in Fig. 1E dargestellten Matrixmuster der Bestrahlungseinheiten 28. Auch in diesem Fall kann aufgrund der erhöhten bzw. übermäßigen Abdeckung eine überlappende Bestrahlung der Baufläche 14 und daher eine zuverlässige Verfestigung der Formmasse 18 erreicht werden. Es versteht sich, dass übergeordnet auch Mischformen dieser beiden Varianten denkbar sind (also sowohl eine zumindest teilweise überlappende Anordnung der Einzelbereiche 32 wie auch eine Bestrahlung mit einer Abdeckung von mehr als 100 %).

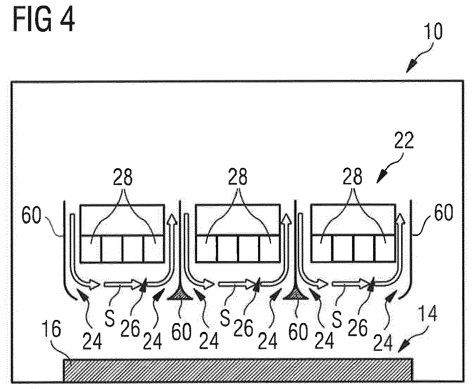

In Figur 4 ist eine weitere Ausführungsform der Vorrichtung 10 gezeigt, die eine weitere Variante zur Schutzgasführung entlang der Bestrahlungsanordnung 22 betrifft. Dabei ist in Figur 4 erneut der Träger 16 sowie die Baufläche 14 gezeigt, die der Unterseite 26 der Bestrahlungsanordnung 22 gegenüberliegen. Die Bestrahlungsanordnung 22 umfasst erneut mehrere Bestrahlungseinheiten 28. Diese sind jedoch in einzelne Gruppen beziehungsweise Module zusammengefasst, wobei vorliegend jedes Modul eine quadratische Anordnung aus vier mal vier Bestrahlungseinheiten 28 umfasst. In der Ansicht von Figur 4 ist dabei lediglich eine äußerste Reihe von vier Bestrahlungseinheiten 28 je Modul gezeigt und die weiteren Bestrahlungseinheiten 28 sind in die Blattebene hinein versetzt.

In Figur 4 erkennt man ferner, dass je einzelnem Modul von Bestrahlungseinheiten 28 zwei Fluidleitungsbereiche 24 vorgesehen sind, die über Blenden 60 definiert sind. Dabei dienen die jeweils linken Fluidleitungsbereiche 24 als Schutzgaszuführbereich und die jeweils rechten Fluidleitungsbereiche 24 als Schutzgasabführbereich. Man erkennt, dass die Blenden 60 jeweils derart konstruiert sind, dass sie das einströmende Schutzgas je Modul gemäß dem Pfeil S von dem Schutzgaszuführbereich zu dem Schutzgasabführbereich leiten, wobei sich eine Schutzgasströmung S entlang der Unterseite 26 der jeweiligen Module von Bestrahlungseinheiten 28 einstellt. Aufgrund des kürzeren Strömungsweges der Schutzgasströmung S lässt sich somit eine besonders effektive Kühlung der Bestrahlungseinheiten 28 erzielen. Ferner kann die Kühlung je einzelnem Modul individuell angepasst werden, beispielsweise in Abhängigkeit einer Aktivierung und/oder eines erwarteten oder bereits erfolgten Energieeintrages mittels der Module in die Formmasse 18. Letzteres kann beispielsweise erneut mittels der Steuereinheit aus den Daten des herzustellenden Werkstückes ermittelt werden.

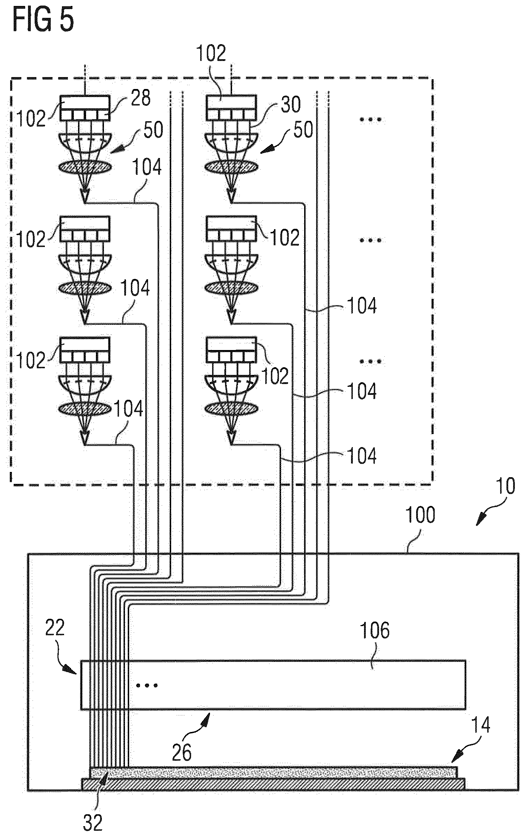

In Figur 5 ist ein Beispiel zur Anordnung der Strahlquellen der Bestrahlungsanordnung 22 in einem entfernten Bereich der Vorrichtung 10 gezeigt und insbesondere außerhalb einer Prozesskammer 100. Konkret ist eine Mehrzahl von Strahlquellen 102 gezeigt, die analog zu dem Beispiel aus Figur 3 jeweils eine Gruppe von vier mal vier Bestrahlungseinheiten 28 umfassen. Über Optikeinheiten 50 werden die einzelnen emittierten Strahlen 30 der jeweiligen Gruppen von Strahlquellen 102 analog zu der Ausführungsform gemäß Figur 3 gebündelt und jeweils in zugeordnete Lichtleiter 104 geleitet. Die Lichtleiter 104 erstrecken sich bis in die Prozesskammer 100 und insbesondere bis in einen der Baufläche 14 gegenüberliegenden Grundkörper 106 der Bestrahlungsanordnung 22. An der Unterseite 26 des Grundkörpers 106 sind die Lichtleiter 104 wiederum analog zu Figur 1E matrixförmig angeordnet, sodass die gebündelten Strahlen 30 der einzelnen Bestrahlungseinheiten 28 erneut entsprechenden Einzelbereichen 32 der Baufläche 14 zugeordnet sind.

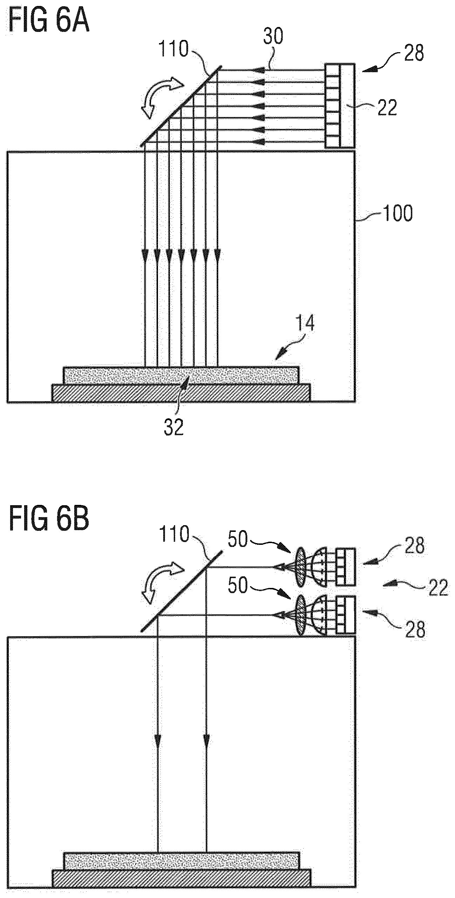

Die Figuren 6A-B zeigen Möglichkeiten zum Variieren einer Zuordnung zwischen den Einzelbereichen 32 der Baufläche 14 und den einzelnen Bestrahlungseinheiten 28 (nicht Teil der Erfindung). In Figur 6A ist dabei die Bestrahlungsanordnung 22 außerhalb der Prozesskammer 100 angeordnet und emittiert im Wesentlichen parallel zu der Baufläche 14 ausgerichtete Strahlen 30. Diese werden mittels einer Ablenkeinrichtung 110 in Form einer zweiaxialen Scannereinrichtung abgelenkt, insbesondere derart, dass deren Auftreffpunkte auf der Baufläche 14 flexibel einstellbar sind. Somit kann beispielsweise je herzustellender Werkstückschicht oder aber auch während des Herstellens einer einzelnen Werkstückschicht eine derartige Ablenkung erfolgen, dass die Strahlen 30 wechselnden Einzelbereichen 32 zugeordnet werden.

In Figur 6B ist ein analoges Prinzip gezeigt, wobei jedoch die Bestrahlungseinheiten 28 gemäß dem Beispiel aus Figur 3 ausgebildet sind und zusätzliche Optikeinheiten 50 aufweisen.

## Patentansprüche

1. Vorrichtung (10) zum Herstellen dreidimensionaler Werkstücke,
wobei die Vorrichtung (10) umfasst:
- eine Baufläche (14), die dazu eingerichtet ist, eine Formmasse (18) aufzunehmen; und
- eine Bestrahlungsanordnung (22), die dazu eingerichtet ist, die Formmasse (18) auf der Baufläche (14) selektiv mit elektromagnetischer Strahlung zu bestrahlen, um ein Werkstück mittels eines generativen Schichtbauverfahrens herzustellen,
wobei die Bestrahlungsanordnung (22) eine Mehrzahl von stationär innerhalb der Bestrahlungsanordnung (22) angeordneten und parallel zur Baufläche (14) unbeweglichen Bestrahlungseinheiten (28) umfasst,
wobei die Bestrahlungseinheiten (28) dazu eingerichtet sind, einen ihnen jeweils zugeordneten Einzelbereich (32) der Baufläche (14) zu bestrahlen,
wobei die Bestrahlungseinheiten (28) jeweils derart ausgebildet sind, dass die Strahlen (30) unter einem unveränderlichen Winkel relativ zu der Bestrahlungsanordnung (22) emittiert werden,
wobei die emittierten Strahlen der Bestrahlungseinheiten (28) jeweils eine Querschnittsfläche aufweisen, die zwischen 2% und 170% der Fläche des jeweils zugeordneten Einzelbereichs (32) entspricht,
wobei die Vorrichtung (10) ferner eine Steuereinrichtung umfasst, die dazu ausgebildet ist, nach Maßgabe einer aktuell herzustellenden Werkstückschicht die Bestrahlungseinheiten (28) zu steuern,
**dadurch gekennzeichnet, dass**
die Steuereinrichtung dazu ausgebildet ist, die Bestrahlungseinheiten (28) derart zu steuern, dass diese zum Herstellen einer Werkstückschicht aufeinanderfolgend und/oder in mehreren Schritten die Formmasse (18) bestrahlen, und
wobei die Steuereinrichtung dazu ausgebildet ist, die Bestrahlungseinheiten (28) derart zu steuern, dass in einem ersten Bestrahlungsschritt ein erster Anteil (42) einer herzustellenden Werkstückschicht aus der Formmasse (18) gebildet wird und in einem zweiten Bestrahlungsschritt ein zweiter Anteil (44) der herzustellenden Werkstückschicht aus der Formmasse (18) gebildet wird.

2. Vorrichtung (10) nach Anspruch 1,
wobei die Einzelbereiche (32) derart angeordnet sind, dass sie gemeinsam zumindest einen Teil der Baufläche (14) kontinuierlich abdecken, und/oder
wobei die Bestrahlungseinheiten (28) jeweils derart ausgebildet sind, dass die Strahlen (30) unter einem unveränderlichen Winkel von 20° bis 160° auf die Baufläche (14) treffen, und/oder
wobei die Bestrahlungseinheiten (28) in vorbestimmten Abständen relativ zueinander angeordnet sind, und insbesondere in regelmäßigen und/oder gleichen Abständen relativ zueinander und, optional, matrix-, gitter- oder netzförmig innerhalb der Bestrahlungsanordnung (22).

3. Vorrichtung (10) nach einem der vorangehenden Ansprüche,
wobei die Steuereinrichtung, dazu ausgebildet ist, nach Maßgabe der aktuell herzustellenden Werkstückschicht die Bestrahlungseinheiten (28) derart zu steuern, dass vorbestimmte Bestrahlungsmuster auf der Baufläche (14) erzeugt werden.

4. Vorrichtung (10) nach einem der vorangehenden Ansprüche,
wobei die Steuereinrichtung dazu ausgebildet, nach Maßgabe einer aktuell herzustellenden Werkstückschicht die Intensität der von den Bestrahlungseinheiten (28) emittierten Strahlung zu steuern,
wobei die Steuereinrichtung insbesondere dazu ausgebildet ist, die Intensität der Bestrahlungseinheiten (28) derart zu steuern, dass nur ausgewählte aus der Mehrzahl von Bestrahlungseinheiten (28) eine verfestigungswirksame Strahlung erzeugen.

5. Vorrichtung (10) nach einem der vorangehenden Ansprüche,
wobei die Steuereinrichtung dazu ausgebildet ist, die Bestrahlungseinheiten (28) derart zu steuern, dass zum Herstellen einer Werkstückschicht wenigstens ein Bestrahlungsvektor (S2) auf der Formmasse (18) nachgebildet wird.

6. Vorrichtung (10) nach einem der vorangehenden Ansprüche,
wobei die Bestrahlungseinheiten (28) jeweils eine Strahlquelle umfassen und/oder wobei die emittierte Strahlung zumindest einiger der Bestrahlungseinheiten (28) mittels einer zusätzlichen Optikeinheit (50) zu einem gemeinsamen Strahl (52) gebündelt wird.

7. Verfahren zum Herstellen dreidimensionaler Werkstücke,
mittels einer Vorrichtung (10), die Folgendes umfasst:
- eine Baufläche (14), die dazu eingerichtet ist, eine Formmasse (18) aufzunehmen; und
- eine Bestrahlungsanordnung (22), die dazu eingerichtet ist, die Formmasse (18) auf der Baufläche (14) selektiv mit elektromagnetischer Strahlung zu bestrahlen, um ein Werkstück mittels eines generativen Schichtbauverfahrens herzustellen,
wobei die Bestrahlungsanordnung eine Mehrzahl von stationär innerhalb der Bestrahlungsanordnung (22) angeordneten und parallel zur Baufläche (14) unbeweglichen Bestrahlungseinheiten (28) umfasst, die dazu eingerichtet sind, einen ihnen jeweils zugeordneten Einzelbereich (32) der Baufläche (14) zu bestrahlen,
wobei das Verfahren den folgenden Schritt umfasst:
- Emittieren von Strahlen (30) durch zumindest ausgewählte aus der Mehrzahl von Bestrahlungseinheiten (28) unter einem unveränderlichen Winkel relativ zu der Bestrahlungsanordnung (22) über eine Mehrzahl von herzustellenden Werkstückschichten auf einen den Bestrahlungseinheiten (28) jeweils zugeordneten Einzelbereich (32), wobei die Querschnittsfläche der emittierten Strahlen (30) jeweils zwischen 2% und 170% der Fläche des jeweils zugeordneten Einzelbereiches (32) entspricht,
wobei das Verfahren ferner den folgenden Schritt umfasst:
- Steuern der Bestrahlungseinheiten (28) nach Maßgabe einer aktuell herzustellenden Werkstückschicht,
**dadurch gekennzeichnet, dass**
das Steuern der Bestrahlungseinheiten (28) derart erfolgt, dass diese zum Herstellen einer Werkstückschicht aufeinanderfolgend und/oder in mehreren Schritten die Formmasse (18) bestrahlen, und
wobei das Steuern der Bestrahlungseinheiten (28) derart erfolgt, dass in einem ersten Bestrahlungsschritt ein erster Anteil (42) einer herzustellenden Werkstückschicht aus der Formmasse (18) gebildet wird und in einem zweiten Bestrahlungsschritt ein zweiter Anteil (44) der herzustellenden Werkstückschicht aus der Formmasse (18) gebildet wird.

8. Verfahren nach Anspruch 7,
wobei Steuern der Bestrahlungseinheiten (28) nach Maßgabe der aktuell herzustellenden Werkstückschicht derart ausgeführt wird, dass vorbestimmte Bestrahlungsmuster auf der Baufläche (14) erzeugt werden.

9. Verfahren nach Anspruch 7 oder 8,
ferner umfassend den Schritt:
- Steuern der Intensität der von den Bestrahlungseinheiten (28) emittierten Strahlung nach Maßgabe der aktuell herzustellenden Werkstückschicht,
wobei das Steuern der Intensität der Bestrahlungseinheiten (28) insbesondere derart erfolgt, dass nur ausgewählte aus der Mehrzahl von Bestrahlungseinheiten (28) eine verfestigungswirksame Strahlung erzeugen.

10. Verfahren nach einem der Ansprüche 7 bis 9,
wobei das Steuern der Bestrahlungseinheiten (28) derart erfolgt, dass zum Herstellen einer Werkstückschicht wenigstens ein Bestrahlungsvektor (S2) auf der Formmasse (18) erzeugt wird.

11. Verwenden einer Vorrichtung nach einem der Ansprüche 1 bis 6 zum Herstellen eines dreidimensionalen Werkstückes mittels eines generativen Schichtbauverfahrens.

## Claims

1. Device (10) for producing three-dimensional workpieces, wherein the device (10) comprises:
- a build surface (14) which is adapted to receive a molding compound (18); and
- an irradiation arrangement (22) which is adapted to selectively irradiate the molding compound (18) on the build surface (14) with electromagnetic radiation in order to produce a workpiece by means of an additive layer manufacturing activity,
wherein the irradiation arrangement (22) comprises a plurality of irradiation units (28) which are arranged so as to be stationarily within the irradiation arrangement (22) and are unmovable parallel to the build surface (14),
wherein the irradiation units (28) are adapted to irradiate a respective associated individual region (32) of the build surface (14),
wherein the irradiation units (28) each being adapted such that the beams (30) are emitted at an unchangeable angle relative to the irradiation arrangement (22),
wherein the emitted beams of the irradiation units (28) each have a cross-sectional area which corresponds to between 2% and 170% of the area of the respective associated individual region (32),
wherein the device (10) further comprises a control device which is configured to control the irradiation units (28) according to a workpiece layer currently to be produced,
**characterized in that**
the control device is configured to control the irradiation units (28) in such a manner that, in order to produce a workpiece layer, they irradiate the molding compound (18) one after the other and/or in a plurality of steps, and
wherein the control device is configured to control the irradiation units (28) in such a manner that, in a first irradiation step, a first portion (42) of a workpiece layer to be produced is formed from the molding compound (18) and, in a second irradiation step, a second portion (44) of the workpiece layer to be produced is formed from the molding compound (18).

2. Device (10) according to claim 1,
wherein the individual regions (32) are so arranged that together they continuously cover at least a portion of the build surface (14), and/or wherein the irradiation units (28) are each so configured that the beams (30) strike the build surface (14) at an unchangeable angle of from 20° to 160°, and/or
wherein the irradiation units (28) are arranged at predetermined distances relative to one another, and in particular at regular and/or equal distances relative to one another and, optionally, in a matrix, lattice, or network form within the irradiation arrangement (22).

3. Device (10) according to any of the preceding claims, wherein the control device is configured to control the irradiation units (28) according to the workpiece layer currently to be produced in such a manner that predetermined irradiation patterns are generated on the build surface (14).

4. Device (10) according to any of the preceding claims,
wherein the control device is configured to control the intensity of the radiation emitted by the irradiation units (28) according to a workpiece layer currently to be produced,
wherein the control device in particular is configured to control the intensity of the irradiation units (28) in such a manner that only selected ones of the plurality of irradiation units (28) generate radiation that is effective for solidification.

5. Device (10) according to any of the preceding claims, wherein the control device is configured to control the irradiation units (28) in such a manner that, in order to produce a workpiece layer, at least one irradiation vector (S2) is reproduced on the molding compound (18).

6. Device (10) according to any of the preceding claims, wherein the irradiation units (28) each comprise a radiation source and/or wherein the emitted radiation of at least some of the irradiation units (28) is concentrated by an additional optics unit (50) to form a common beam (52).

7. Method for producing three-dimensional workpieces by means of a device (10) which comprises the following:
- a build surface (14) which is adapted to receive a molding compound (18); and
- an irradiation arrangement (22) which is adapted to selectively irradiate the molding compound (18) on the build surface (14) with electromagnetic radiation in order to produce a workpiece by means of an additive layer manufacturing method,
wherein the irradiation arrangement comprises a plurality of irradiation units (28) which are arranged stationarily within the irradiation arrangement (22) and are unmovable parallel to the build surface (14), which irradiation units are adapted to irradiate a respective associated individual region (32) of the build surface (14),
wherein the method comprises the following step:
- emitting beams (30) by at least selected ones of the plurality of irradiation units (28) at an unchangeable angle relative to the irradiation arrangement (22) over a plurality of workpiece layers to be produced onto a respective individual region (32) associated with the irradiation units (28), wherein the cross-sectional area of the emitted beams (30) corresponds to between 2% and 170% of the area of the respective associated individual region (32),
the method further comprising the following step:
- controlling the irradiation units (28) according to a workpiece layer currently to be produced,
**characterized in that**
the control of the irradiation units (28) takes place in such a manner that, in order to produce a workpiece layer, they irradiate the molding compound (18) one after the other and/or in a plurality of steps, and
wherein the control of the irradiation units (28) takes place in such a manner that, in a first irradiation step, a first portion (42) of a workpiece layer to be produced is formed from the molding compound (18), and, in a second irradiation step, a second portion (44) of the workpiece layer to be produced is formed from the molding compound (18).

8. Method according to claim 7,
wherein control of the irradiation units (28) according to the workpiece layer currently to be produced takes place in such a manner that predetermined irradiation patterns are generated on the build surface (14).

9. Method according to claim 7 or 8,
further comprising the step of:
- controlling the intensity of the radiation emitted by the irradiation units (28) according to the workpiece layer currently to be produced,
wherein the control of the intensity of the irradiation units (28) in particular takes place in such a manner that only selected ones of the plurality of irradiation units (28) generate a radiation that is effective for solidification.

10. Method according to any of claims 7 to 9,
wherein the control of the irradiation units (28) takes place in such a manner that, in order to produce a workpiece layer, at least one irradiation vector (S2) is generated on the molding compound (18).

11. Use of a device according to any of claims 1 to 6 for producing a three-dimensional workpiece by means of an additive layer manufacturing method.

## Revendications

1. Dispositif (10) de fabrication de pièces tridimensionnelles, dans lequel le dispositif (10) comprend :
- une surface de construction (14) qui est conçue pour recevoir une matière à mouler (18) ; et
- un agencement d'irradiation (22) qui est configuré pour irradier sélectivement la matière à mouler (18) sur la surface de construction (14) avec un rayonnement électromagnétique afin de fabriquer une pièce au moyen d'un procédé de construction générative par couches,
dans lequel l'agencement d'irradiation (22) comprend une pluralité d'unités d'irradiation (28) disposées de manière stationnaire à l'intérieur de l'agencement d'irradiation (22) et immobiles parallèlement à la surface de construction (14),
dans lequel les unités d'irradiation (28) sont configurées pour irradier une zone individuelle (32) de la surface de construction (14) qui leur est respectivement attribuée,
dans lequel les unités d'irradiation (28) sont respectivement configurées de telle sorte que les rayons (30) sont émis selon un angle invariable par rapport à l'agencement d'irradiation (22),
dans lequel les rayons émis par les unités d'irradiation (28) présentent respectivement une surface de section transversale qui correspond à entre 2 % et 170 % de la surface de la zone individuelle (32) respectivement attribuée,
dans lequel le dispositif (10) comprend en outre un appareil de commande qui est configuré pour commander les unités d'irradiation (28) en fonction d'une couche de pièce à fabriquer actuellement,
**caractérisé en ce que**
l'appareil de commande est configuré pour commander les unités d'irradiation (28) de telle sorte que celles-ci irradient la matière à mouler (18) successivement et/ou en plusieurs étapes pour la fabrication d'une couche de pièce, et
dans lequel l'appareil de commande est configuré pour commander les unités d'irradiation (28) de telle sorte que, dans une première étape d'irradiation, une première portion (42) d'une couche de pièce à fabriquer est produite à partir de la matière à mouler (18) et, dans une seconde étape d'irradiation, une seconde portion (44) de la couche de pièce à fabriquer est produite à partir de la matière à mouler (18).

2. Dispositif (10) selon la revendication 1,
dans lequel les zones individuelles (32) sont disposées de telle sorte qu'elles recouvrent ensemble au moins une partie de la surface de construction (14) de manière continue, et/ou dans lequel les unités d'irradiation (28) sont respectivement configurées de telle sorte que les rayons (30) frappent la surface de construction (14) selon un angle invariable de 20° à 160°, et/ou
dans lequel les unités d'irradiation (28) sont disposées à des distances prédéterminées les unes par rapport aux autres, et en particulier à des distances régulières et/ou égales les unes par rapport aux autres et, en option, sous forme de matrice, de grille ou de réseau à l'intérieur de l'agencement d'irradiation (22).

3. Dispositif (10) selon l'une des revendications précédentes, dans lequel l'appareil de commande est configuré pour commander les unités d'irradiation (28) en fonction de la couche de pièce à fabriquer actuellement, de telle sorte que des modèles d'irradiation prédéterminés sont générés sur la surface de construction (14).

4. Dispositif (10) selon l'une des revendications précédentes,
dans lequel l'appareil de commande est configuré pour commander l'intensité du rayonnement émis par les unités d'irradiation (28) en fonction d'une couche de pièce à fabriquer actuellement,
dans lequel l'appareil de commande en particulier est configuré pour commander l'intensité des unités d'irradiation (28) de telle sorte que seules des unités d'irradiation sélectionnées parmi la pluralité d'unités d'irradiation (28) génèrent un rayonnement à effet de solidification.

5. Dispositif (10) selon l'une des revendications précédentes, dans lequel l'appareil de commande est configuré pour commander les unités d'irradiation (28) de telle sorte que, pour la fabrication d'une couche de pièce, au moins un vecteur d'irradiation (S2) est reproduit sur la matière à mouler (18).

6. Dispositif (10) selon l'une des revendications précédentes, dans lequel les unités d'irradiation (28) comprennent respectivement une source de rayonnement et/ou dans lequel le rayonnement émis par au moins certaines des unités d'irradiation (28) est focalisé en un rayon (52) commun au moyen d'une unité optique (50) supplémentaire.

7. Procédé de fabrication de pièces tridimensionnelles, au moyen d'un dispositif (10) qui comprend les éléments suivants :
- une surface de construction (14) qui est conçue pour recevoir une matière à mouler (18) ; et
- un agencement d'irradiation (22) qui est configuré pour irradier sélectivement la matière à mouler (18) sur la surface de construction (14) avec un rayonnement électromagnétique afin de fabriquer une pièce au moyen d'un procédé de construction générative par couches,
dans lequel l'agencement d'irradiation comprend une pluralité d'unités d'irradiation (28) disposées de manière stationnaire à l'intérieur de l'agencement d'irradiation (22) et immobiles parallèlement à la surface de construction (14), lesquelles sont configurées pour irradier une zone individuelle (32) de la surface de construction (14) qui leur est respectivement attribuée,
dans lequel le procédé comprend l'étape suivante :
- émettre de rayons (30), par au moins des unités d'irradiation sélectionnées parmi la pluralité d'unités d'irradiation (28) selon un angle invariable par rapport à l'agencement d'irradiation (22), sur une pluralité de couches de pièce à fabriquer sur une zone individuelle (32) respectivement attribuée aux unités d'irradiation (28), dans lequel la surface de section transversale des rayons (30) émis correspond respectivement à entre 2 % et 170 % de la surface de la zone individuelle (32) respectivement attribuée,
dans lequel le procédé comprend en outre l'étape suivante :
- commander des unités d'irradiation (28) en fonction d'une couche de pièce à fabriquer actuellement,
**caractérisé en ce que**
la commande des unités d'irradiation (28) est effectuée de telle sorte que celles-ci irradient la matière à mouler (18) successivement et/ou en plusieurs étapes pour la fabrication d'une couche de pièce, et
dans lequel la commande des unités d'irradiation (28) est effectuée de telle sorte que, dans une première étape d'irradiation, une première portion (42) d'une couche de pièce à fabriquer est produite à partir de la matière à mouler (18) et, dans une seconde étape d'irradiation, une seconde portion (44) de la couche de pièce à fabriquer est produite à partir de la matière à mouler (18).

8. Procédé selon la revendication 7,
dans lequel la commande des unités d'irradiation (28) est mise en oeuvre en fonction de la couche de pièce à fabriquer actuellement de telle sorte que des modèles d'irradiation prédéterminés sont générés sur la surface de construction (14).

9. Procédé selon la revendication 7 ou 8,
comprenant en outre l'étape consistant à :
- commander l'intensité du rayonnement émis par les unités d'irradiation (28) en fonction de la couche de pièce à fabriquer actuellement,
dans lequel la commande de l'intensité des unités d'irradiation (28) en particulier est effectuée de telle sorte que seules des unités d'irradiation sélectionnées parmi la pluralité d'unités d'irradiation (28) génèrent un rayonnement à effet de solidification.

10. Procédé selon l'une des revendications 7 à 9,
dans lequel la commande des unités d'irradiation (28) est effectuée de telle sorte que, pour la fabrication d'une couche de pièce, au moins un vecteur d'irradiation (S2) est généré sur la matière à mouler (18).

11. Utilisation d'un dispositif selon l'une des revendications 1 à 6 pour la fabrication d'une pièce tridimensionnelle au moyen d'un procédé de construction générative par couches.
